# EUROPÄISCHE PATENTSCHRIFT

(11) **EP 4 065 399 B1**
(45) Veröffentlichungstag und Bekanntmachung des Hinweises auf die Patenterteilung: **02.07.2025**
(21) Anmeldenummer: 20807052.4
(22) Anmeldetag: 19.11.2020
(51) Int. Cl.: B60K 11/08, F01P 7/10

(54) **KÜHLERJALOUSIE FÜR AUTOMOBILE**
RADIATOR BLIND FOR AUTOMOBILES
VOLET DE RADIATEUR POUR AUTOMOBILES

(30) Priorität: 26.11.2019 CH 14972019; 10.12.2019 EP 19214688; 02.04.2020 CH 3972020
(43) Veröffentlichungstag der Anmeldung: 05.10.2022
(73) Patentinhaber: Adval Tech Holding AG, 3172 Niederwangen (CH)
(72) Erfinder: GÖBEL, Markus, 6280 Hochdorf (CH)
(74) Vertreter: Bremi, Tobias Hans
(86) Internationale Anmeldenummer: PCT/EP2020/082706
(87) Internationale Veröffentlichungsnummer: WO 2021/104992

(56) Entgegenhaltungen:
- EP-A1- 3 466 738
- WO-A1-2018/029655
- WO-A1-2019/152520
- DE-A1- 102016 224 846
- US-A1- 2014 335 778

## Beschreibung

### TECHNISCHES GEBIET

Die vorliegende Erfindung betrifft eine Kühlerjalousie für Automobile aus einem thermoplastischen Kunststoff. Weiter betrifft die vorliegende Erfindungsverfahren zur Herstellung einer derartigen Kühlerjalousie und Verwendungen einer solchen Konstruktion.

### STAND DER TECHNIK

Eine Kühlerjalousie für Automobile ist eine Vorrichtung zur kontrollierten Führung der über die Front in das Fahrzeug einströmenden Außenluft zu Motor. Eine verlässliche Steuerung dieses Luftstroms ist entscheidend für eine zuverlässige Führung des Verbrennungsprozesses, mithin für die Effizienz des Motors und den Schadstoffausstoß. Eine Kühlerjalousie ist in der Regel eine Gruppe von parallel horizontal oder vertikal angeordneten Lamellen, die in einem Rahmen derart drehbar respektive schwenkbar gelagert sind, dass sie von einer vollständig offenen Position (die Ebenen der Blätter der quer zur Fahrzeugachse orientierten horizontalen Lamellen sind im Wesentlichen dann in einer horizontalen Ebene angeordnet) um einen Winkel von etwas weniger als 90° in eine geschlossene Position drehbar sind, bei welcher dann die Lamellen mit ihrer Ebene ungefähr vertikal verlaufen und jeweils im Randbereich überlappen.

Die in derartigen Rahmenkonstruktionen gelagerten Lamellen werden heutzutage von einem kleinen Elektromotor in die entsprechende gewünschte und über eine Steuerung vorgegebene Winkelposition geregelt, sodass für jeden Betriebszustand die optimale Luftzufuhr vorliegt.

In der US2014335778 wird eine Fahrzeugkühlerjalousie zum Erfassen einer Lamelle bereitgestellt, zu der eine Kraftübertragung unterbrochen ist, indem in den Lamellen Drehbewegungsbegrenzungseinheiten bereitgestellt werden, die jeweils eine einfache Struktur haben. Es wird eine Fahrzeugkühlerjalousie bereitgestellt, mit: mehreren Lamellen, die dazu geeignet sind, einen Außenluftzufuhrpfad zum Einleiten von Außenluft in einen Motorraum zu öffnen und zu schließen, und derart parallel zueinander angeordnet sind, dass sie den Außenluftzufuhrpfad kreuzen, einem Kopplungsbetätigungsabschnitt, der die Lamellen miteinander koppelt, um die Lamellen zu öffnen/zu schließen, einem Antriebsabschnitt zum Antreiben der Lamellen auf eine offene und eine geschlossene Position durch den Kopplungsbetätigungsabschnitt, einem Abnormalitätserfassungsabschnitt zum Erfassen eines abnormalen Zustands der Lamellen auf der Basis eines Betriebszustands des Antriebsabschnitts und einem Abnormalitätsmitteilungsabschnitt zum Informieren eines Benutzers über den abnormalen Zustand auf der Basis eines Ausgangssignals des Abnormalitätserfassungsabschnitts. Eine Öffnungsstörung erfassende Begrenzungseinheiten und eine Schließstörung erfassende Begrenzungseinheiten sind auf benachbarten Lamellen als Drehbewegungsbegrenzungseinheiten ausgebildet, die, wenn die Kraftübertragung vom Antriebsabschnitt zu einer der benachbarten Lamellen unterbrochen ist, die Drehbewegung der anderen Lamelle begrenzen.

WO2018029655 offenbart eine aktive Kühlergrillklappenanordnung mit einem zusammengebauten modularen Rahmen mit mehreren primären Rahmenteilen, die durch Extrusion gebildet sind. Jedes der mehreren primären Rahmenteile hat ein erstes Ende, ein zweites Ende und mindestens einen Schlüsselschlitz, der sich zwischen dem ersten Ende und dem zweiten Ende erstreckt. Jedes der Vielzahl von Rahmenteilen umfasst auch eine hohle Bohrung, die sich durch jedes der Vielzahl von primären Rahmenteilen erstreckt und eine Öffnung an dem ersten Ende und eine Öffnung an dem zweiten Ende bildet. Wenn der modulare Rahmen zusammengebaut ist, gibt es einen oberen Rahmenabschnitt und einen unteren Rahmenabschnitt, die beide aus einem der mehreren primären Rahmenteile gebildet sind. Die Anordnung umfasst auch eine Anzahl von alternativen Rahmen- und Luftleitblechstücken, die es ermöglichen, mehrere unterschiedliche Formen und Konfigurationen des aktiven Kühlergrills zu bilden.

### DARSTELLUNG DER ERFINDUNG

Es ist unter anderem Aufgabe der vorliegenden Erfindung, eine Kühlerjalousie, insbesondere für Automobile, bereitzustellen, welche verlässlich betrieben werden kann, einfach hergestellt werden kann, und insbesondere robust ist in Bezug auf Fehlfunktionen respektive diese verhindert und/oder so schnell wie möglich an die Steuerung zurückmeldet.

In der Erfindung betrifft entsprechend eine Kühlerjalousie, insbesondere für ein Automobil zur kontrollierten Belüftung des Motors, mit einem Rahmen in welchem wenigstens zwei Lamellen derart drehbar gelagert sind.

Diese Lamellen können einer vollständig geschlossenen Position (ca. 0°), in welcher die Lamellenblätter der Lamellen im Wesentlichen parallel zur Rahmenebene angeordnet sind, und im aneinander grenzenden Bereich entweder teilweise überlappen oder dicht aneinander liegen, sodass die Rahmenöffnung im Wesentlichen für den Luftdurchfluss geschlossen ist, in eine geöffnete Position (ca. 90° typischerweise in Realität ca. 85°), in welcher die Lamellenblätter der Lamellen im Wesentlichen senkrecht zur Rahmenebene angeordnet sind, sodass die Rahmenöffnung im Wesentlichen maximal für den Luftdurchfluss geöffnet ist, verschwenkbar sind.

Diese Lamellen sind dabei an zwei gegenüberliegenden Seiten des Rahmens in Lagerstellen gelagert. Zudem ist im oder am Rahmen, vorzugsweise in einen entsprechenden Rahmenbereich integriert, auf einer Motorseite des Rahmens ein Motor vorgesehen, welcher eine einzige Lamelle antreibt. Zudem ist auf der gleichen Motorseite des Rahmens ein Kopplungselement vorgesehen, welches die Drehung der angetriebenen Lamelle synchron überträgt auf die weiteren Lamellen.

Die vorgeschlagene Konstruktion ist dadurch gekennzeichnet, dass auf der der Motorseite des Rahmens abgewandten Lagerungsseite des Rahmens im Bereich der dort vorgesehenen Lagerung der Lamellen für jede Lamelle jeweils ein Verriegelungselement vorgesehen ist, welches die Funktion erfüllt, dass, wenn eine einzige der Lamellen nicht mehr synchron mit den anderen Lamellen mit dreht (dies schließt die angetriebene Lamelle mit ein), automatisch auf dieser dem Motor abgewandten Lagerungsseite durch diese Verriegelungselemente eine Verriegelung der Drehbewegung erfolgt. Dies wird vom Motor bemerkt, weil plötzlich dann ein erhöhtes Drehmoment erzeugt werden muss, infolge des ungewöhnlichen im normalen Betriebszustand nicht vorgesehenen Anschlags.

Auf der der Motorseite des Rahmens abgewandten Lagerungsseite des Rahmens im Bereich der dort vorgesehenen Lagerung der Lamellen ist also für jede Lamelle ein Verriegelungselement vorgesehen, wobei die Verriegelungselemente derart direkt oder indirekt gekoppelt sind, dass, wenn wenigstens eines der Verriegelungselemente nicht synchron mit allen anderen Verriegelungselementen dreht, die Drehbewegung der Verriegelungselemente in wenigstens eine Richtung blockiert wird, vorzugsweise kraft- und/oder formschlüssig.

Die Verriegelungselemente können dabei als separate Elemente zu den eigentlichen Lamellen ausgebildet sein, sodass, wenn eine Lamelle ausbricht, die Verriegelungselemente nach wie vor im Rahmen verbleiben und die Verriegelungsfunktion, beispielsweise mit einer Verriegelungsstange, oder durch Wechselwirkung mit den benachbarten Verriegelungselementen, gewährleisten können. Alternativ ist es möglich, die Lamellen verbunden oder sogar einstückig mit den eigentlichen Lamellen auszubilden, dann wird vorzugsweise sichergestellt, dass, auch wenn eine Lamelle ausbricht, die Verriegelungselemente im Rahmen verbleiben. Dazu kann beispielsweise die Verbindung zwischen Verriegelungselementen und Lamelle (in Form zum Beispiel eines Verbindungzapfens) als lösbare Steckverbindung oder als Sollbruchstelle ausgebildet sein, sodass jeweils das Verriegelungselement im Rahmen verbleibt, wenn die Lamelle ausbricht. Um dies zu unterstützen kann das Verriegelungselement zusätzlich im Rahmen oder in einer zusätzlichen Abdeckung des Rahmens (beispielsweise durch eine entsprechende Kontur in einer Abdeckung) wenigstens teilweise so gefangen sein, dass das Verriegelungselement beim Ausbrechen der Lamelle gar nicht aus dem Rahmen respektive dieser Abdeckung heraustreten kann.

Nach der beanspruchten Erfindung ist dabei als Verriegelungselement eine Verriegelungsscheibe vorgesehen, und die Verriegelungsscheiben weisen eine Form auf, welche, wenn wenigstens eine der Verriegelungsscheiben nicht synchron mit allen anderen Verriegelungsscheiben dreht, die Drehbewegung der Verriegelungsscheiben insbesondere kraft- und/oder formschlüssig blockiert.

Gemäß einer ersten bevorzugten Ausführungsform ist die Konstruktion dadurch gekennzeichnet, dass im Rahmen wenigstens drei, vorzugsweise wenigstens vier, insbesondere bevorzugt genau vier Lamellen parallel gelagert sind.

Eine weitere bevorzugte Ausführungsform ist dadurch gekennzeichnet, dass die jeweilige Verriegelungsscheibe mit der zugehörigen Lamelle in beide Drehrichtungen gekoppelt ist, und wobei die Verriegelungsscheiben vorzugsweise jeweils wenigstens eine im Wesentlichen senkrecht zur jeweiligen Lamellenachse angeordnete Verriegelungsplatte aufweisen.

Eine weitere bevorzugte Ausführungsform ist dadurch gekennzeichnet, dass wenigstens eine erste Verriegelungsplatte in einem ersten Umfangbereich einen größeren Radius aufweist als in einem zweiten, vorzugsweise im wesentlichen gegenüberliegenden Umfangbereich.

Eine weitere bevorzugte Ausführungsform ist dadurch gekennzeichnet, dass es zwei, in Bezug auf die Achse der Verriegelungsscheibe versetzte, vorzugsweise anliegende Verriegelungsplatten gibt, wobei insbesondere bevorzugt eine zweite Verriegelungsplatte seitliche laterale Vorsprünge aufweist.

Eine weitere bevorzugte Ausführungsform ist dadurch gekennzeichnet, dass wenigstens eine, vorzugsweise alle der Verriegelungsscheiben spiegelsymmetrisch bezüglich einer Spiegelebene ausgebildet sind, welche Spiegelebene die Achse einschließt.

Eine weitere bevorzugte Ausführungsform ist dadurch gekennzeichnet, dass im nicht-verriegelten Betriebszustand zwischen den Verriegelungsscheiben stets ein Minimalabstand beibehalten wird, wobei dieser Minimalabstand vorzugsweise im Bereich von 0.1-5 mm oder 0.1- 4 mm, vorzugsweise 0.1-1 mm, insbesondere im Bereich von 0.25-0.75 mm liegt.

Nach einer weiteren Ausgestaltung der beanspruchten Erfindung weisen die Verriegelungselemente wenigstens einen bezüglich der Drehachse der Lamellen radial versetzten Eingriffzapfen auf, der parallel zur Drehachse der Lamellen verläuft und bei Drehung der Lamelle mit dieser synchron eine kreisbogenförmige Bewegung vollzieht, und dass die Eingriffzapfen aller Verriegelungselemente über eine gemeinsame, senkrecht zur Achse der Lamellen verlaufende Verriegelungsstange gekoppelt sind.

Die Eingriffzapfen laufen dabei vorzugsweise in der Verriegelungsstange in Verriegelungsausnehmungen, wobei die Verriegelungsausnehmungen vorzugsweise als Langloch oder längliche Aussparung ausgestaltet sind, deren längere Achse senkrecht zur Hauptverlaufsrichtung der Verriegelungsstange verläuft. Langloch oder längliche Aussparung können dabei als Durchgangsöffnung oder als Nut insbesondere in Form einer Kulisse ausgestaltet sein. Weiter ist es möglich, dass Langloch oder längliche Aussparung auf wenigstens einer Seite für eine erleichterte Montage in der Verriegelungsstange nicht geschlossen sind, und diese offene Seite anschließend durch ein weiteres Bauteil für den Betrieb geschlossen wird. Gerade bei dieser offenen Bauweise ist es von Vorteil, wenn Langloch oder längliche Aussparung nicht in Form einer Durchgangsöffnung, sondern in Form einer Nut ausgebildet sind. Die Verriegelungsstange kann weiter bevorzugt derart gelagert sein, dass sie im Wesentlichen nur entlang ihrer Hauptverlaufsrichtung verschoben werden kann, nicht aber in einer Richtung senkrecht dazu. Dazu können entsprechende entlang der Hauptverlaufsrichtung der Verriegelungsstange angeordnete Führungsnuten oder entsprechende Durchgangsöffnungen angeordnet sein, in die stationäre Führungsstifte eingreifen.

Die Eingriffzapfen sind vorzugsweise in der vollständig geschlossenen Position oder in der vollständig geöffneten Position in Hauptverlaufsrichtung der Verriegelungsstange bezüglich der Drehachse der jeweiligen Lamelle im wesentlichen maximal ausgelenkt, und drehen bei der Rotation in die vollständig geöffnete respektive die vollständig geschlossene Position in eine Position, bei welcher sie in Hauptverlaufsrichtung der Verriegelungsstange im Wesentlichen auf der Höhe der Drehachse der jeweiligen Lamelle liegen, wobei vorzugsweise die Eingriffzapfen bei der vollständig geöffneten respektive vollständig geschlossenen Position jeweils in den Endbereich des Langlochs oder der länglichen Aussparung zu liegen kommen.,

Das Langloch oder die längliche Aussparung weist vorzugsweise in Richtung der maximalen Auslenkung der Eingriffzapfen jeweils eine Fangvertiefung und/oder einen seitlichen Versatz, vorzugsweise auf halber Höhe des Langlochs respektive der länglichen Aussparung, auf.

Die Verriegelungsstange kann in einer Verriegelungsführung derart geführt sein, dass sie nur in einer einzigen Richtung senkrecht zu den Drehachsen der Lamellen aber nicht in Richtung der Normalen zur Ebene, die durch die Drehachsen der Lamellen aufgespannt wird, verschoben werden kann.

Eine weitere bevorzugte Ausführungsform ist dadurch gekennzeichnet, dass die Verriegelungsscheiben als von den Lamellen separate Bauteile ausgebildet sind, in welche vorzugsweise Lagerungszapfen der Lamellen nur drehgesichert eingeschoben sind.

Eine weitere bevorzugte Ausführungsform ist dadurch gekennzeichnet, dass die Verriegelungsscheiben in einem durch eine Trennwand von der Durchgangsöffnung des Rahmens getrennten gekapselten Bereich des Rahmens angeordnet sind, und wobei vorzugsweise Lagerungszapfen der Lamellen durch Durchgangsöffnungen in der Trennwand hindurchgreifen. Die Lagerungsvorsprünge der Verriegelungsscheiben können dabei ihrerseits in die Durchgangsöffnung in der Trennwand hineingreifen, und diese Lagerungsvorsprünge können mit einem Sackloch oder einer Durchgangsöffnung ausgestaltet sein, sodass ein entsprechender Lagerungszapfen der jeweiligen Lamelle in dieses Loch eingreift. Dabei gibt es bevorzugt eine Strukturierung des inneren dieser Öffnung und eine entsprechende Strukturierung der Außenkontur des Lagerungszapfens der jeweiligen Lamelle, sodass die Lamellen eingeschoben drehgesichert sind. Auf der Außenseite von derartigen Lagerungsvorsprüngen können zudem axial verlaufende Gleitstege angeordnet sein, die die Anfälligkeit für Verschmutzung reduzieren, da diese Gleitstege in den entsprechenden Aufnahmeöffnungen im Rahmen respektive einer entsprechenden Trennwand nur in Bereichen gleiten.

Eine weitere bevorzugte Ausführungsform ist dadurch gekennzeichnet, dass die Lamellen eine Länge von wenigstens 10 cm, oder wenigstens 20cm oder wenigstens 50 cm, vorzugsweise von mehr als 60 cm oder mehr als 1 m, insbesondere bevorzugt von im Bereich von 10 - 150 cm oder 20 - 120cm, oder auch im Bereich von 1,2-2 m aufweisen, und wobei insbesondere vorzugsweise im Rahmen ein vertikaler Zwischensteg vorgesehen ist, welcher Zwischenlager-Bereiche der Lamellen lagert.

Es kann sich bei der Konstruktion auch um eine Kühlerjalousie mit mehr als einem Lamellenbereich handeln, beispielsweise zwei Lamellenbereichen auf beiden Seiten. Die Lamellenbereiche können dabei jeweils individuell durch einen Motor angetrieben sein, oder sie können auch vorzugsweise beide durch den gleichen Motor angetrieben sein. In letzterer Situation ist dieser Motor vorzugsweise in der Mitte zwischen den beiden Lamellenbereichen angeordnet, und der Mechanismus zur Verriegelung jeweils auf der Außenseite für jedes Lamellenpaket individuell. Wird mit einem zentralen Motor gearbeitet, kann in dieser Situation als Koppelstange eine Stange gewählt werden, die einstückig oder zumindest fest zusammengebaut beide Lamellenpakete bewegt.

Insbesondere dann, wenn individuelle Lamellen eine für eine Rückmeldung an den Motor ungenügende Torsionsstabilität aufweisen, kann in einem Lamellenpaket eine der Lamellen selektiv mit einer höheren Torsionsstabilität als jene der anderen Lamellen ausgebildet werden, oder es kann anstelle einer Lamelle oder zusätzlich zu einer Lamelle (beispielsweise im Rahmen oberhalb oder unterhalb des Lamellenpakets angeordnet) ein separates Übertragungselement mit genügender Torsionsstabilität vorgesehen werden, um eine genügende Rückmeldung an den Motor bei Blockierung oder Ausfall einer Lamelle zu gewährleisten.

Eine weitere bevorzugte Ausführungsform ist dadurch gekennzeichnet, dass die Lamellen im Inneren einen herstellungsbedingten sich entlang der Achse der jeweiligen Lamelle erstreckenden Hohlraum aufweisen.

Eine weitere bevorzugte Ausführungsform ist dadurch gekennzeichnet, dass das Kopplungselement als Koppelstange ausgebildet ist, wobei vorzugsweise der Motor die angetriebenen Lamellen direkt über ihre Achse antreibt, und die Koppelstange, die vorzugsweise parallel zur Rahmenebene angeordnet ist und senkrecht zu den Achsen der Lamellen, über einen Kopplungshebel bewegt wird, und die anderen Lamellen über entsprechende an die Koppelstange angekoppelte Kopplungshebel synchron bewegt werden.

Zudem betrifft die vorliegende Erfindung ein Verfahren zum Betrieb respektive der Ansteuerung einer Kühlerjalousie wie oben beschrieben, wobei dieses Verfahren vorzugsweise dadurch gekennzeichnet ist, dass die Steuerung des Motors derart ausgelegt ist, dass eine Fehlermeldung ausgegeben wird, wenn der Motor wegen Verriegelung der Verriegelungsscheiben auf eine verriegelte Anschlagsposition fährt, die nicht der geschlossenen oder der geöffneten Endposition der Lamellen entspricht, wobei vorzugsweise das Erreichen einer solchen verriegelten Anschlagsposition über eine Erhöhung des vom Motor erzeugten Drehmoments erfasst wird.

Weiter betrifft die vorliegende Erfindung ein Verfahren zur Herstellung einer Kühlerjalousie wie oben beschrieben, welches vorzugsweise dadurch gekennzeichnet ist, dass Rahmen, Lamellen und Verriegelungsscheiben individuell aus einem thermoplastischen Material, vorzugsweise aus einem glasfaserverstärkten thermoplastischen Material, insbesondere bevorzugt aus glasfaserverstärktem thermoplastischem Polyamid in einem Spritzgussverfahren hergestellt werden, und anschließend zur Kühlerjalousie zusammengesetzt werden.

Zu guter Letzt betrifft die vorliegende Erfindung die Verwendung einer Kühlerjalousie wie oben beschrieben als Lufteinlassregelungselement in einem Automobil oder generell in einem Transportmittel, insbesondere in einem Automobil, vorzugsweise zur gezielten Luftzuführung zu einem Motor (Verbrennungsmotor, Elektromotor), einem Motorbestandteil, einem Energiespeicher (beispielsweise Batterie bei einem elektrisch betriebenen Fahrzeug) oder einem anderen wärmeerzeugenden Bauteil.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Kühlerjalousie im zusammengebauten Zustand in einer perspektivischen Ansicht;
- Fig. 2: eine Kühlerjalousie gemäß Figur 1 in einer Explosionsdarstellung;
- Fig. 3: eine Kühlerjalousie mit Verriegelungselementen;
- Fig. 4: die Kühlerjalousie von Figur 3 in Explosionsdarstellung;
- Fig. 5: eine weitere Kühlerjalousie mit Verriegelungselementen;
- Fig. 6: die Kühlerjalousie gemäß Figur 5, in a) ein vergrößerter Ausschnitt der Motorseite und in b) ein vergrößerter Ausschnitt auf der Lagerungsseite der Lamellen mit den Verriegelungselementen;
- Fig. 7: die Kühlerjalousie gemäß Figur 5 in Explosionsdarstellung;
- Fig. 8: die Verriegelungselemente in a) in einer Sicht vom Rahmeninneren, in b) in einer Sicht vom Rahmen äußeren und in c) in einer perspektivischen Ansicht;
- Fig. 9: in perspektivischer Ansicht Verriegelungselemente gemäß einer weiteren Ausführungsform, wobei in a) eine Sicht auf die erste Verriegelungsplatte und in b) eine Sicht auf die zweite Verriegelungsplatte dargestellt ist;
- Fig. 10: die verschiedenen Standardpositionen von der Seite der ersten Verriegelungsplatte, wobei in a) die geschlossene Position (0°), in b) die halboffene Position (42.5°) und in c) die offene Position (85°) dargestellt sind;
- Fig. 11: die verschiedenen Standardpositionen von der Seite der zweiten Verriegelungsplatten, wobei in a) die geschlossene Position (0°), in b) die halboffene Position (42.5°) und in c) die offene Position (85°) dargestellt sind;
- Fig. 12: die verschiedenen Positionen, wenn ein Verriegelungselement nicht mitdreht (das unterste) und von der geschlossenen Position (0°) ausgehend geöffnet werden soll, wobei in a) die offene Position (0°) von der Seite der ersten Verriegelungsplatte dargestellt ist und in b) die nach Öffnungsdrehung erreichte Blockierung bei ca. 12° von der Seite der ersten Verriegelungsplatte, und in c) die offene Position (0°) von der Seite der zweiten Verriegelungsplatte dargestellt ist und in d) die nach Öffnungsdrehung erreichte Blockierung bei ca. 12° von der Seite der zweiten Verriegelungsplatte;

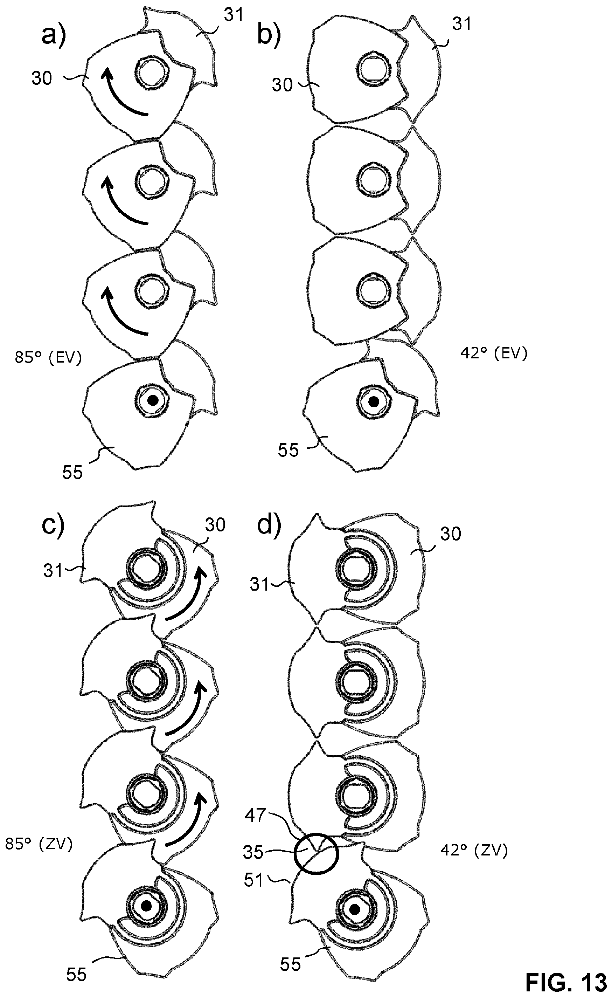

- Fig. 13: die verschiedenen Positionen, wenn ein Verriegelungselement nicht mitdreht (das unterste) und von der offenen Position (85°) ausgehend geschlossen werden soll, wobei in a) die geschlossene Position (85°) von der Seite der ersten Verriegelungsplatte dargestellt ist und in b) die nach Schließdrehung erreichte Blockierung bei ca. 42° von der Seite der ersten Verriegelungsplatte, und in c) die geschlossene Position (85°) von der Seite der zweiten Verriegelungsplatten dargestellt ist und in d) die nach Schließdrehung erreichte Blockierung bei ca. 42° von der Seite der zweiten Verriegelungsplatte;

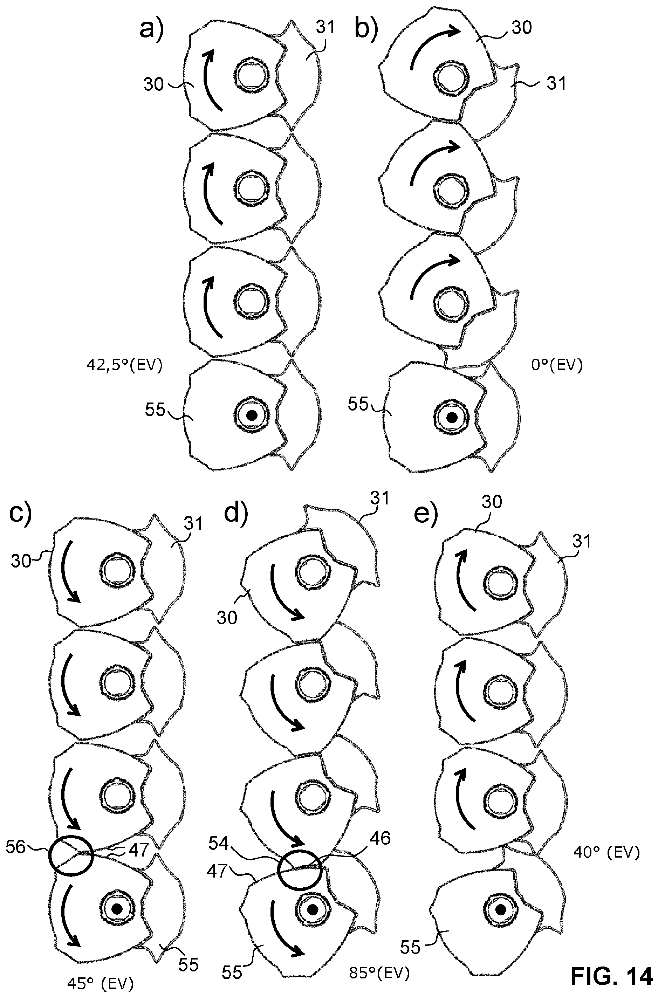

- Fig. 14: die verschiedenen Positionen, wenn ein Verriegelungselement nicht mitdreht (das unterste) und von der halboffenen Position (42.5°) ausgehend geschlossen werden soll, jeweils von der Seite der ersten Verriegelungsplatte, wobei in a) die halboffene Ausgangsposition (42.5°) dargestellt ist, in b) die geschlossene Position (0°), wobei das unterste Verriegelungselement stehen bleibt, in c) die Rückwärtsdrehung zur offenen Position bei ca. 45° dargestellt ist, wenn das unterste Verriegelungselement aus seiner Rotationsposition geschoben wird, in d) die offene Position (85°), und in e) die blockierte Position bei ca. 40°, nachdem wieder in Richtung geschlossene Position gedreht wurde;

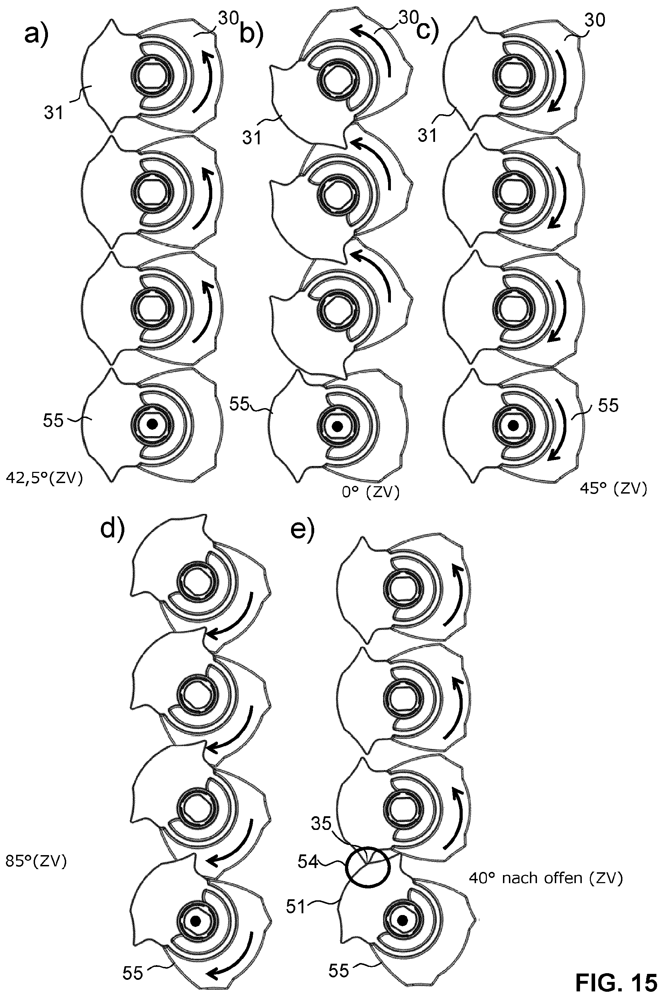

- Fig. 15: die verschiedenen Positionen, wenn ein Verriegelungselement nicht mitdreht (das unterste) und von der halboffenen Position (42.5°) ausgehend geschlossen werden soll, jeweils von der Seite der zweiten Verriegelungsplatte, wobei in a) die halboffene Ausgangsposition (42.5°) dargestellt ist, in b) die geschlossene Position (0°), wobei das unterste Verriegelungselement stehen bleibt, in c) die Rückwärtsdrehung zur offenen Position bei ca. 45° dargestellt ist, wenn das unterste Verriegelungselement aus seiner Rotationsposition geschoben wird, in d) die offene Position (85°), und in e) die blockierte Position bei ca. 40°, nachdem wieder in Richtung geschlossene Position gedreht wurde;

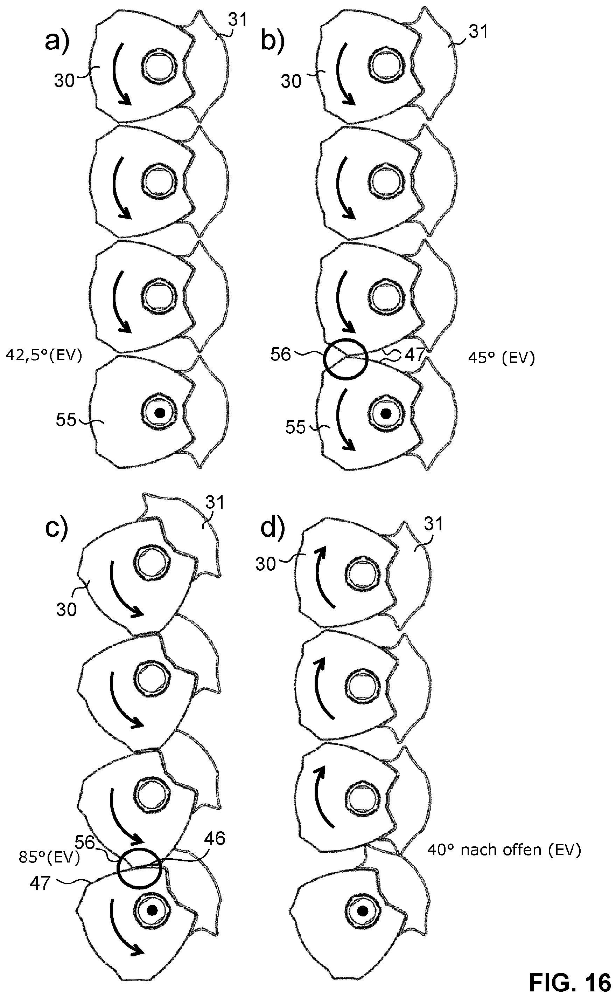

- Fig. 16: die verschiedenen Positionen, wenn ein Verriegelungselement nicht mitdreht (das unterste) und von der halboffenen Position (42.5°) ausgehend geöffnet werden soll, jeweils von der Seite der ersten Verriegelungsplatte, wobei in a) die halboffene Ausgangsposition (42.5°) dargestellt ist, in b) Position bei ca. 45°, wenn das unterste Verriegelungselement aus seiner Rotationsposition geschoben wird, in c) die offene Position dargestellt ist, bei welcher die ersten Verriegelungsplatten in Anlage kommen aber nicht verriegeln, und in d) die blockierte Position bei ca. 40°, nachdem wieder in Richtung offene Position gedreht wurde;

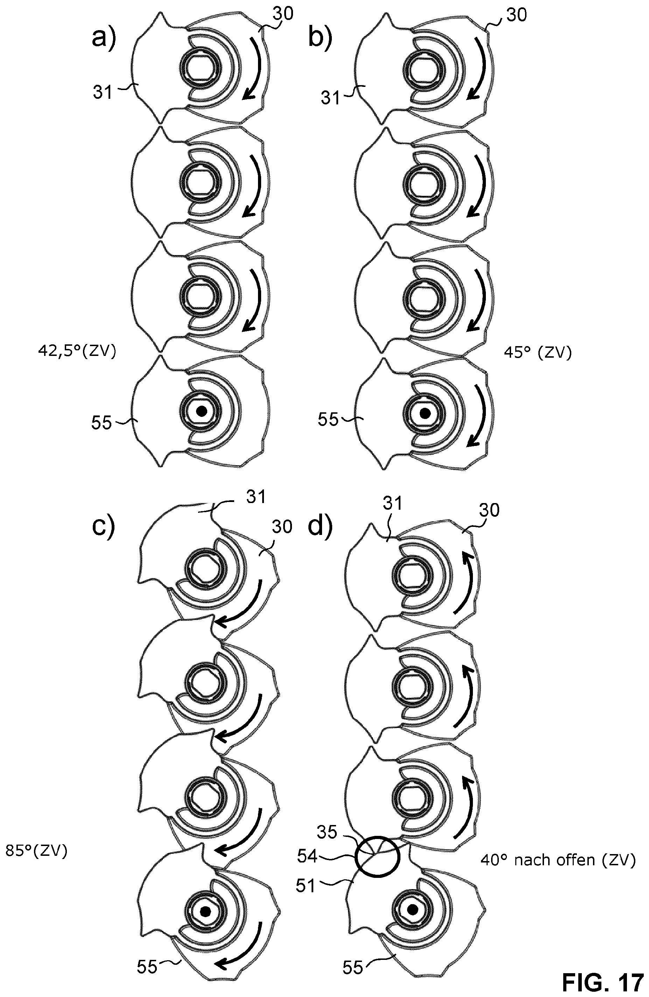

- Fig. 17: die verschiedenen Positionen, wenn ein Verriegelungselement nicht mitdreht (das unterste) und von der halboffenen Position (42.5°) ausgehend geöffnet werden soll, jeweils von der Seite der zweiten Verriegelungsplatte, wobei in a) die halboffene Ausgangsposition (42.5°) dargestellt ist, in b) Position bei ca. 45°, wenn das unterste Verriegelungselement aus seiner Rotationsposition geschoben wird, in c) die offene Position dargestellt ist, bei welcher die ersten Verriegelungsplatten in Anlage kommen aber nicht verriegeln, und in d) die blockierte Position bei ca. 40°, nachdem wieder in Richtung offene Position gedreht wurde;
- Fig. 18: zeigt ein weiteres Ausführungsbeispiel einer Kühlerjalousie in einer perspektivischen Darstellung von der Seite des Motors, diesmal mit fünf Lamellen, die typischerweise für eine vertikale Ausrichtung ihrer Achsen vorgesehen ist;
- Fig. 19: zeigt die Kühlerjalousie gemäß Figur 18, diesmal in einer Ansicht perspektivisch auf die Verriegelungsseite, in a) im zusammengesetzten Zustand ohne Abdeckung und in b) in einer Explosionsdarstellung bezüglich Verriegelung;
- Fig. 20: zeigt das Verhalten der Verriegelungsstange bei der Drehung der Lamellen von der geschlossenen Position (ganz oben) in die geöffnete Position (ganz unten) für verschiedene Winkelstellungen
- Fig. 21: in a) die Ausgangsposition bei der geschlossenen Stellung, in b) die Verriegelung, wenn die Lamellen ganz rechts gebrochen ist und nicht mit dreht, ausgehend von der ganz geschlossenen Position, und in c) ausgehend von einer leicht geöffneten Position
- Fig. 22: zeigt die Verriegelung, wenn der Eingriffzapfen der gebrochenen Lamelle in der Fangvertiefung gefangen wird;
- Fig. 23: zeigt die Verriegelung, wenn die Lamelle ganz rechts gebrochen ist und von der ganz geschlossenen Position ausgegangen wird;
- Fig. 24: zeigt die Verriegelung, wenn die Lamelle ganz rechts gebrochen ist und von der ganz geöffneten Position ausgegangen wird;
- Fig. 25: zeigt die Verriegelung, wenn die Lamelle ganz rechts gebrochen ist und von der halbgeöffneten Position (45°) in Richtung schließen gegangen wird;
- Fig. 26: zeigt die Verriegelung, wenn die Lamelle ganz rechts gebrochen ist und von der halbgeöffneten Position (42.5°) in Richtung öffnen gegangen wird;
- Fig. 27: zeigt alternative Gestaltungen der Verriegelungsstangen, wobei in a) eine seitliche Ansicht einer ersten Ausführungsform dargestellt ist, bei welcher die Verriegelungsausnehmungen als Durchgangsöffnungen mit einem Versatz ausgestaltet sind, in b) eine zweite Ausführungsform in einer seitlichen Ansicht, bei welcher die Verriegelungsausnehmungen als einseitig offene Nuten mit Versatz ausgebildet sind, und in c) eine perspektivische Ansicht auf die zweite Ausführungsform dargestellt ist;
- Fig. 28: zeigt eine weitere Kühlerjalousie mit Verriegelungselementen, wobei in a) eine Explosionsdarstellung wiedergegeben ist, und in b) und c) gemäss den Ausschnitten in a) Details der Lamellen auf der Seite der Verriegelungsstange respektive auf der Motorseite und in d) gemäss Ausschnitt in a) Details zur relativen Anordnung und Ausgestaltung von Verriegelungsstange und Abdeckung.

### BESCHREIBUNG BEVORZUGTER AUSFÜHRUNGSFORMEN

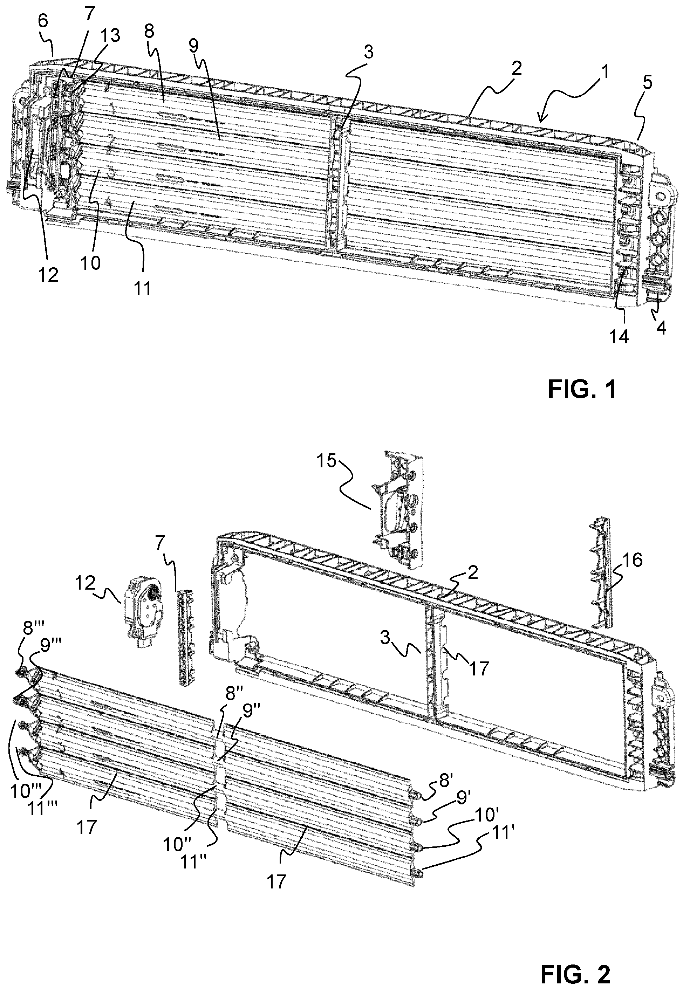

**Figur 1** zeigt eine Kühlerjalousie 1 mit einem Rahmen 2. Der Rahmen verfügt über zwei horizontal gegenüberliegende Längsseiten und über zwei gegenüberliegende vertikale Rahmenabschnitte. Der hier rechts dargestellte vertikale Rahmenabschnitt verfügt über einen seitlichen Befestigungsbereich 4, und in diesem auf der rechten Seite dargestellten Rahmenabschnitt ist der Lagerungsbereich 5 für die horizontal verlaufenden Lamellen vorgesehen. In Figur 1 ist eine solche Kühlerjalousie in einem Automobil montiert von der Motorseite dargestellt. Vor der Montage in einem Fahrzeug wird zusätzlich noch eine innenseitige Abdeckung aufgebracht, die hier und in den folgenden Darstellungen nicht wiedergegeben ist, um das Innenleben des Rahmens sichtbar zu haben.

Die Lamellen 8-11 verlaufen horizontal über eine große Länge von über 1 m. Sie sind auf der hier links dargestellten vertikalen Rahmenseite, dem Motorbereich gelagert und angetrieben. Auf der anderen Seite, dem Lagerungsbereich 5 des Rahmens, sind sie ebenfalls gelagert. Weil die Lamellen 8-11 eine große Länge aufweisen, gibt es im Rahmen einen vertikalen zwischen Steg 3, in welchem die Lamellen ebenfalls gelagert sind. Zu diesem Zweck verfügen sie, wie dies aus der Explosionsdarstellung gemäß **Figur 2** ersichtlich ist, die Lamellen jeweils über ein Zwischenlager 8"-11", dort ist jeweils die Lamelle zylindrisch ausgebildet und verfügt nicht über die eigentlichen, sich auf beide Seiten der zentralen Achse der Lamelle erstreckende Lamellenblätter 17. Auf der Motorseite 6 verfügt der Rahmen über eine entsprechende Ausnehmung, sodass der Motor 12, der zunächst in eine Motoraufnahme 15, dabei handelt es sich um ein Spritzguss-Bauteil, eingeschoben werden kann. Der Motor treibt die zweite Lamelle von oben mit dem Bezugszeichen 9 direkt an, in dem die Motorwelle direkt oder indirekt an den Lagerungskopf 9‴ angekoppelt wird. Die Lamellen sind auf der Motorseite über derartige Lagerungsköpfe 8‴-11‴ gelagert, und auf der gegenüberliegenden Seite über Lagerungszapfen 8'-11'.

Zur Montage werden zunächst die Lamellen mit ihren Lagerungszapfen 8'-11' in entsprechende Lagerungsausnehmungen im Lagerungsbereich 5 eingeschoben, und in entsprechende Lagerungsstellen in der Motoraufnahme 15. Der Motor 12 wird dafür vorzugsweise zuvor in die Aufnahme 15 eingesetzt und dann zusammen mit dem Lamellenpaket in den Rahmen eingeschoben, bis die Zwischenlager 8"-11" in die entsprechenden Ausnehmungen 17 des vertikalen Zwischenstegs 3 eingreifen. Anschließend kann das Zwischenlager mit einer Abdeckung 16 von der Vorderseite geschlossen werden.

Der Motor 12 ist wie bereits oben erwähnt angekoppelt an den Lagerungskopf 9" der angetriebenen Lamelle 9. Der Motor bewegt die Lamellen zwischen einer vollständig geschlossenen Position (0°), bei welcher die lateralen Enden der Lamellen gerade etwas überlappen, und einer vollständig geöffneten Position (ca. 90°), bei welcher die Ebenen der Lamellen im Wesentlichen senkrecht zur Rahmenebene stehen, und der Durchfluss für Luft maximal freigegeben ist. In Figur 1 ist die geschlossene Position dargestellt.

Um die Bewegung der anderen Lamellen 8,10-11 an die Bewegung der angetriebenen Lamelle 9 synchron anzukoppeln ist eine Koppelstange 7 vorgesehen. Die Koppelstange wird über einen Exzenter der Antriebslamelle 9 angetrieben, und bewegt die anderen Lamellen 8, 10-11, die ihrerseits über analoge Exzenter verfügen, synchron mit.

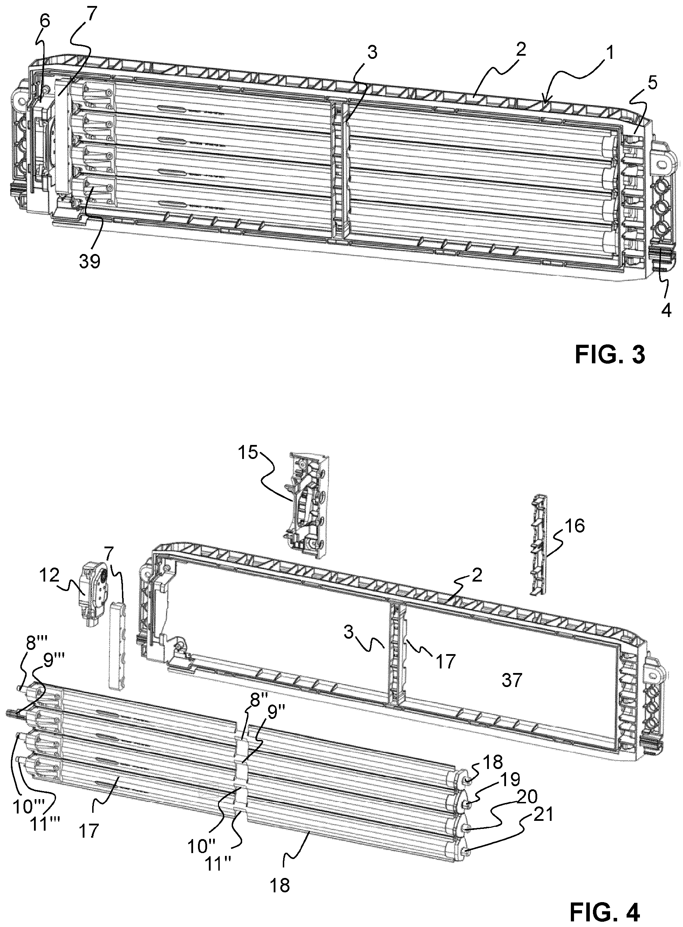

In **Figur 3** ist eine Kühlerjalousie mit Verriegelungselementen dargestellt. In **Figur 4** ist eine entsprechende Explosionsdarstellung wiedergegeben. Es wird darauf verzichtet, analoge oder gleiche Elemente, die bereits im Zusammenhang mit Figuren 1-2 beschrieben werden, in der Folge noch einmal zu beschreiben.

Beim Lagerungsbereich 5 gibt es jetzt hier auf die dortigen Enden der Lamellen aufgesteckte OBD-Scheiben 18-21 (OBD steht für on board diagnosis). Die Funktion dieser Scheiben wird weiter unten im Detail dargelegt. Damit sind die auf der rechten Seite dargestellten dem Motor abgewandten Enden der Lamellen nicht mehr direkt im Rahmen gelagert, sondern in diesen OBD-Scheiben 18-21, die als eingangs genannte Verriegelungselemente dienen. Sämtliche dieser Scheiben 18-21 sind bevorzugter Massen baugleich, und sie sind, genau wie der Rahmen und die Lamellen, in einem Spritzgussverfahren aus einem thermoplastischen Material, vorzugsweise Polyamid 6 mit einem Glasfaser Anteil von ca. 50 %, hergestellt.

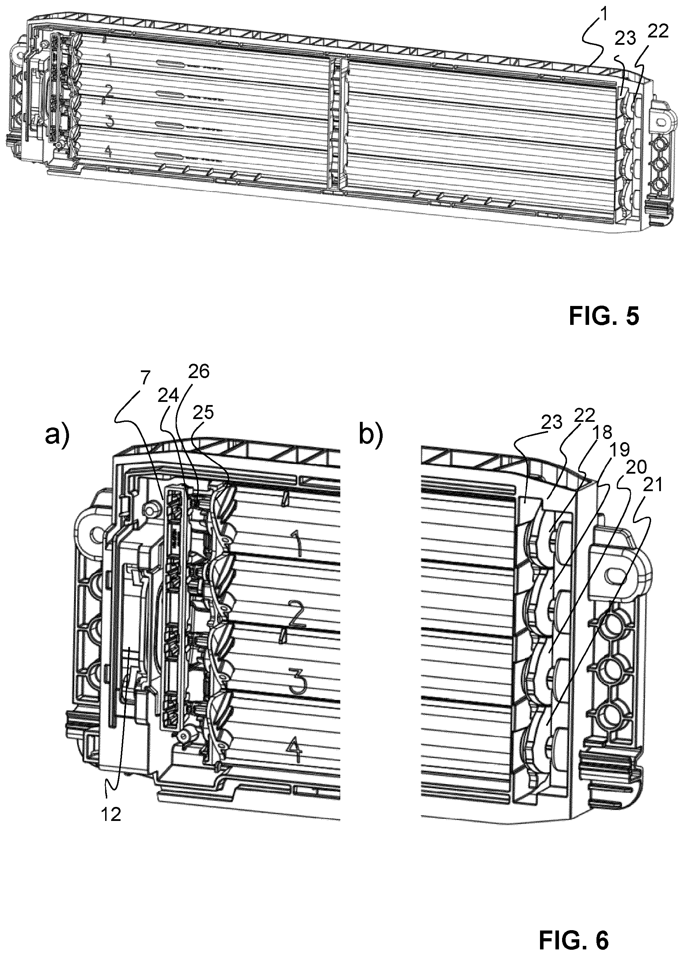

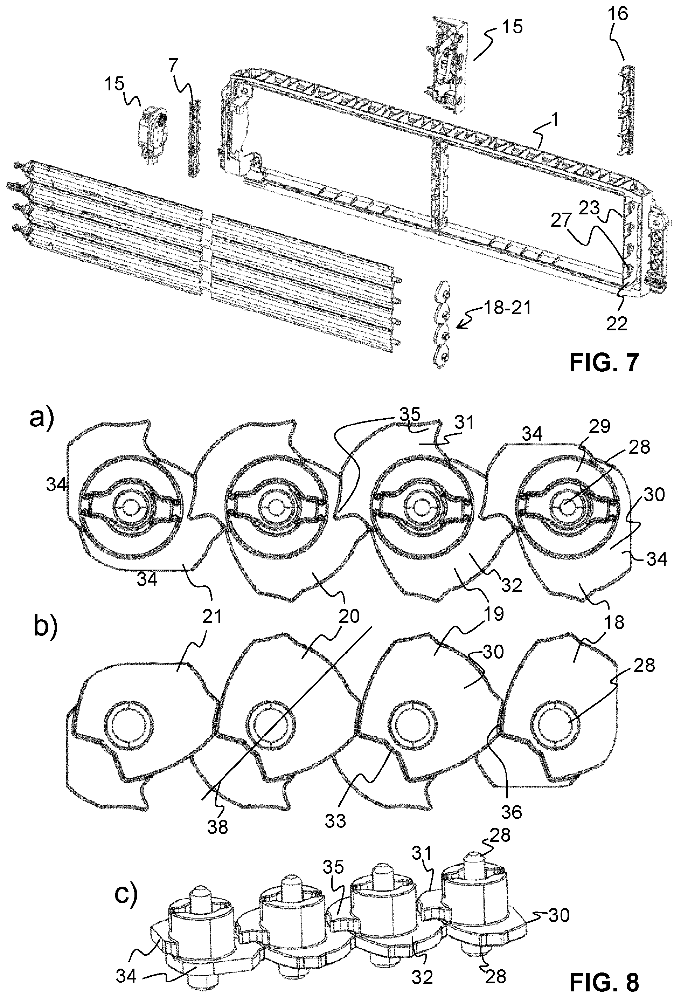

Um die durch die Verriegelung im Defektfall auf der dem Motor abgewandten Seite erhöhten Drehmomente aufnehmen zu können, sind hier die dem Motor zugewandten Bereiche der Lamellen mit Verstärkungen 39 versehen die Verstärkungen sind hier als separate Bauteile ausgebildet, die aufgeschraubt werden, sie können aber, bevorzugt, einstückig mit den Lamellen gleich im Spritzgussverfahren hergestellt werden. Die Verriegelungselemente, d. h. die Scheiben 18-21 sind aber als separate Elemente zu den Lamellen 8-11 ausgebildet. Dies ist wichtig, denn sollte eine Lamelle ganz ausbrechen, würde sonst auch die zugehörige OBD-Scheibe gegebenenfalls ausbrechen, und würde dann ihre Verriegelungsfunktion im Defektfall nicht mehr wahrnehmen können. Ebenfalls kräftiger ausgebildet als in der Darstellung gemäß Figur 1 ist hier die Koppelstange, wiederum wegen der aufgrund der Verriegelung hören Momente, die Anliegen können im Defektfall. In **Figur 5** ist eine weitere etwas andere Bauweise einer solchen Kühlerjalousie mit Verriegelungselementen dargestellt. Eine entsprechende Explosionsdarstellung ist in **Figur 7** wiedergegeben. In diesem Ausführungsbeispiel gibt es, wie dies insbesondere anhand der **Figuren 6** a) und b) erkannt werden kann, auf der Motorseite keine Verstärkungen 39 in Form von separaten aufgeschraubte Bauteilen. Hier sind die jeweiligen Exzenter in Form von Kopplungshebeln 25 der jeweiligen Lamellen kräftiger ausgebildet. Die Kopplungshebel 25 verfügen jeweils über einen der Kopplungsstange 7 zugewandten Kopplungszapfen 26. Dieser Kopplungszapfen 26 greift jeweils in entsprechende Kopplungsnuten in der Koppelstange 7 ein. Auch hier treibt der Motor 12 direkt den entsprechenden Lagerungskopf 9‴ der angetriebenen Lamelle 9 an. Bewegungskopplung mit den anderen Lamellen erfolgt entsprechend über den Kopplungshebel 25 der Lamelle 9 an die Koppelstange 7 und von dieser dann über die entsprechenden Kopplungshebel 25 der anderen Lamellen auf diese.

In Figur 6 b) ist dargestellt, wie, zum Schutz vor Schmutz und ähnlichem, die Verriegelungselemente 18-21 in einem gekapselten Raum 22 angeordnet sind. So kann kein Wasser, Schmutz, etc., auf diese für die Diagnose wichtigen Verriegelungselemente einwirken, der gekapselte Bereich 22 ist nach vorne geschlossen und wird nach hinten bei der fertigen Montage ebenfalls noch durch eine Rahmenabdeckung, die hier nicht dargestellt ist, geschlossen. Der gekapselte Bereich 22 für die Verriegelungselemente ist also durch eine Trennwand 23 im Wesentlichen vollständig von der Rahmenöffnung 37, durch die die Luft und halt auch Schmutz und Wasser etc. strömen kann, getrennt.

Funktion und Form der Verriegelungselemente 18-21 lassen sich am besten anhand von **Figur 8** erläutern. Hier ist oben die Reihe von Verriegelungselementen 18-21 von der Seite der Rahmenöffnung her dargestellt, und in b) die quasi geklappte Sichtweise von außen. In Figur 8 c) ist eine perspektivische Ansicht dieser Reihe von Verriegelungselementen illustriert. Alle Verriegelungselemente ist dabei grundsätzlich vorzugsweise gleich ausgestaltet, hier sind die ganz außen angeordneten Verriegelungselemente 18 und 21 etwas modifiziert (vergleiche die gekappten Bereiche 34), weil das zur Verfügung stehende Gehäuse im Rahmen ansonsten zu Kollisionen bei gewissen Drehpositionen geführt hätte. Bevorzugt sind aber sämtliche Verriegelungselemente 18-21 identisch (vgl. Figuren 9ff). Jedes Verriegelungselement verfügt über zwei in beide Richtungen abstehende Führungsachsen 28 oder Führungszapfen. Die der Lamelle zugewandte Seite ist hier so ausgebildet, dass es einen Führungskragen 29 mit axial verlaufenden Einschnitten gibt, in welche die Blätter 17 der Lamellen eingreifen. Alternativ ist es aber möglich, auf einen solchen Führungskragen 29 zu verzichten, und auf dieser Seite im Zapfen 28 ein Achsloch oder eine Ausnehmung direkt für den jeweiligen Lagerungszapfen 8'-11' der zugehörigen Lamelle vorzusehen. Diese Ausnehmung verfügt über eine Innenstruktur, sodass der entsprechende Zapfen der Lamelle drehgesichert in diese Ausnehmung eingesteckt werden kann.

Die beiden auf beide Seiten abstehenden Achsen 28 greifen in entsprechende Lagerungsausnehmungen, auf der Seite zur Rahmenöffnung in die Durchgangsöffnungen 27, ein. Die Verriegelungselemente sind also quasi individuell und unabhängig von den Lamellen 8 gelagert. Das ist wichtig, den Bericht eine Lamelle 8 heraus, darf die entsprechende Verriegelungsscheibe 18-21 nicht ebenfalls aus dem Rahmen herausfallen, ansonsten sie die Verriegelungsfunktion nicht mehr übernehmen würde und entsprechend die Diagnosefunktion nicht mehr gegeben wäre.

Die Verriegelungselemente 18-21 sind mit entsprechenden Verriegelungsplatten 30,31, die als Excenter ausgebildet sind, und die senkrecht zur Achse 28 verlaufen, ausgebildet. Die Form dieser Verriegelungsplatten wird so gewählt, dass nur synchrone Corotation ohne früher oder später verriegelnde Kollision der Verriegelungsplatten möglich ist. Dreht eine der Verriegelungsplatten respektive eines der Verriegelungselemente 18-21 nicht mit, während die anderen Verriegelungselemente drehen, kommt in jedem Fall nach spätestens einem ganzen Zyklus (z.B. ausgehend von offen: zu und wieder auf), unabhängig von der Ausgangsposition eine radiale Außenkontur eines bewegten Verriegelungselements mit einer Außenkontur des nicht-bewegten Verriegelungselementes in eine Anlage, die eine quasi formschlüssige Verriegelung bewirkt. Zu diesem Zweck gibt es eine erste Verriegelungsplatte 30, die einen ausladenden Bereich 32 und auf der gegenüberliegenden Seite über einen weniger ausladenden Bereich mit Einschnitt 33 verfügt. Diese ersten Verriegelungsplatten sind bei den benachbarten Verriegelungselementen alle auf der gleichen axialen Höhe. Um zu gewährleisten, dass für sämtliche Ausgangspositionen, bei welchen dann eine der Lamellen ausfällt, entweder sofort oder wenigstens nach spätestens einem oder spätestens nach zwei vollständigen Bewegungszyklen eine Verriegelung erfolgt, gibt es hier zusätzlich eine zweite Verriegelungsplatte 31, die über seitliche laterale Vorsprünge 35 verfügt. Diese zweite Verriegelungsplatte 31 stößt gegebenenfalls die nicht mitdrehende benachbarte Verriegelungsplatte in einem Zyklus in eine geänderte Rotationsposition, sodass dann in dieser geänderten Rotationsposition die erste Verriegelungsplatte oder auch die zweite Verriegelungsplatte in einen verriegelten Zustand gefahren wird.

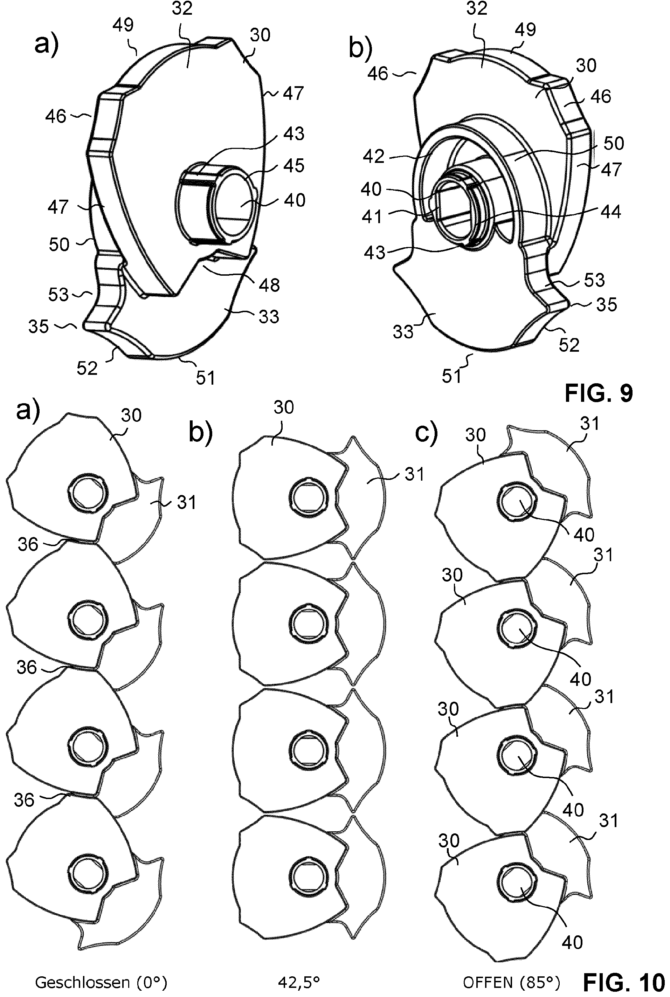

**Figur 9** zeigt in einer perspektivischen Ansicht eine Verriegelungsscheibe 18-21 gemäß einem weiteren Ausführungsbeispiel. Die Formgebung ist hier genauer erkennbar. Die Verriegelungsscheibe verfügt über eine Durchgangsöffnung in Form eines Achsloches 40, darin gibt es eine Kontur, hier eine plane Flanke 41, die dazu dient, ein in dieses Loch eingestecktes Achsenelement 8' der Lamelle so einzuschieben, dass die Verriegelungsscheibe bezüglich Rotation in beide Richtungen an die entsprechende Lamelle gekoppelt ist. Weiter gibt es einen umlaufenden Flansch 44, auf dem Gleitstege 43 vorgesehen sind. Der umlaufende Flansch 45 läuft in einer entsprechenden Ausnehmung im Rahmen, und der auf der gegenüberliegenden Seite der Scheibe angeordnete Flansch 44 läuft in der Durchgangsöffnung 27 in der Trennwand 23. Einen derartigen Flansch gibt es mithin nicht nur auf der Seite der zweiten Verriegelungsplatte 31, sondern auch auf der gegenüberliegenden Seite der ersten Verriegelungsplatte 30, dort ist dieser Flansch 40 höher ausgebildet als auf der gegenüberliegenden Seite. Die Scheiben 18-21 werden in den gekapselten Raum 22 eingelegt, indem zunächst der hohe Flansch 45 in die entsprechenden Öffnungen eingeschoben wird, und anschließend wird die Scheibe unter Zuhilfenahme der Beweglichkeit respektive Flexibilität der Trennwand 23 eingeschoben bis der jeweils gegenüberliegende Flansch 54 in die jeweilige Durchgangsöffnung 27 eingeklipst ist. Die Gleitstege 43 führen zu einer geringeren Schmutzanfälligkeit, Schmutz kann sich namentlich in den zwischen den Gleitstegen angeordneten und mit einem geringeren Radius ausgebildeten Bereichen sammeln und behindert die Drehbewegung deswegen nicht.

Die erste Verriegelungsplatte 30 verfügt wie oben erwähnt auf der einen Seite über einen ausladenden Bereich 32, die Kontur in diesem Bereich wird begrenzt durch jeweils zwei Blockiererbereiche 46, die über einen Übergangsbereich 49 verbunden sind, und zwei laterale Bereiche 47, bei welchen der Radius sukzessive abnimmt. Diese beiden lateralen Bereiche 47 werden verbunden durch den Einschnittbereich 48, der im Zusammenhang mit Figur 8 mit dem Bezugszeichen 33 angegeben wird.

Auf der nächsten Ebene und direkt angrenzend an die erste Verriegelungsplatte 30 befindet sich die zweite Verriegelungsplatte 31. Hier gibt es einen umlaufenden kreiszylindrischen Bereich 50 mit geringem Radius, der beim ausladenden Bereich der ersten Verriegelungsplatte 30 angeordnet ist. Zur Gewichtsersparnis respektive um bei der Herstellung Verzug zu vermeiden kann hier eine Aussparung 42 vorgesehen werden. Auf der diesem kreiszylindrischen Bereich 50 gegenüberliegenden Seite gibt es wiederum einen ausladenden Bereich mit den bereits oben erwähnten lateralen Vorsprüngen 35. Im ausladenden Bereich werden diese beiden Vorsprünge 35 verbunden über jeweils zunächst einen konkaven Übergangsbereich 52 und einen dazwischenliegenden konvexen Blockierbereich 51. Zum kreiszylindrischen Bereich 50 folgen auf die lateralen Vorsprünge 35 die konkaven zweiten Übergangsbereich 53. Sowohl die erste Verriegelungsplatte 30 als auch die zweite Verriegelungsplatte 31 tragen zur Verriegelung bei, die erste Verriegelungsplatte 30 dient insbesondere aber auch noch dazu, eine nicht mit bewegende Scheibe in einem Zyklus in eine Position zu bewegen, sodass bei der weiteren Bewegungsfolge eine Verriegelung erfolgen kann.

Anhand der Figuren 10-17 lässt sich die Verriegelungsfunktion der Scheiben 18-21 erläutern.

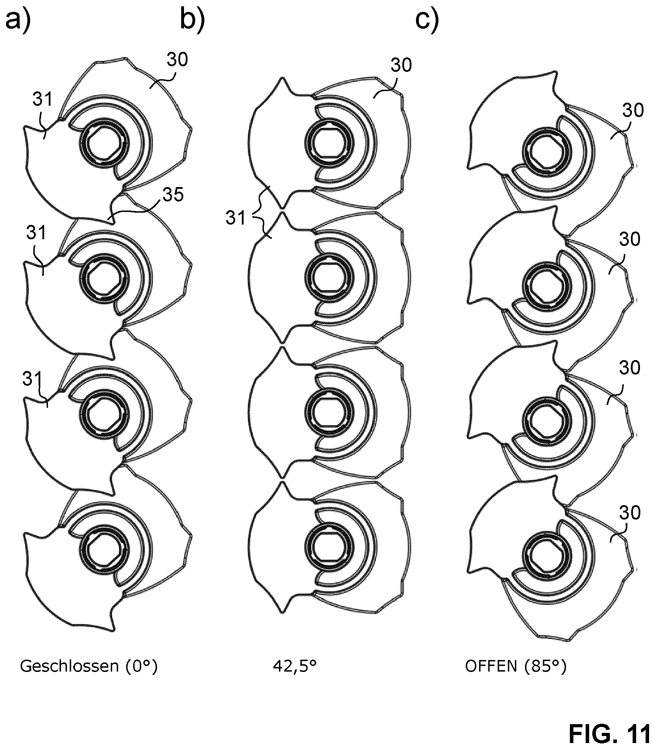

Ausgangspunkt ist dabei jeweils die Normalstellung, diese sind in den **Figuren 10** **und** **11** von der Seite der ersten Verriegelungsplatte 30 respektive der zweiten Verriegelungsplatte 31 dargestellt. Die drei Normalstellungen werden gegeben durch geschlossen (0°), halb geöffnet (42.2°), geöffnet (85°). In jeder dieser Positionen berühren sich die Scheiben untereinander nicht. Die Minimaldistanz beträgt jeweils 0.1 - 5 mm, oder 3 mm oder 0.5 mm.

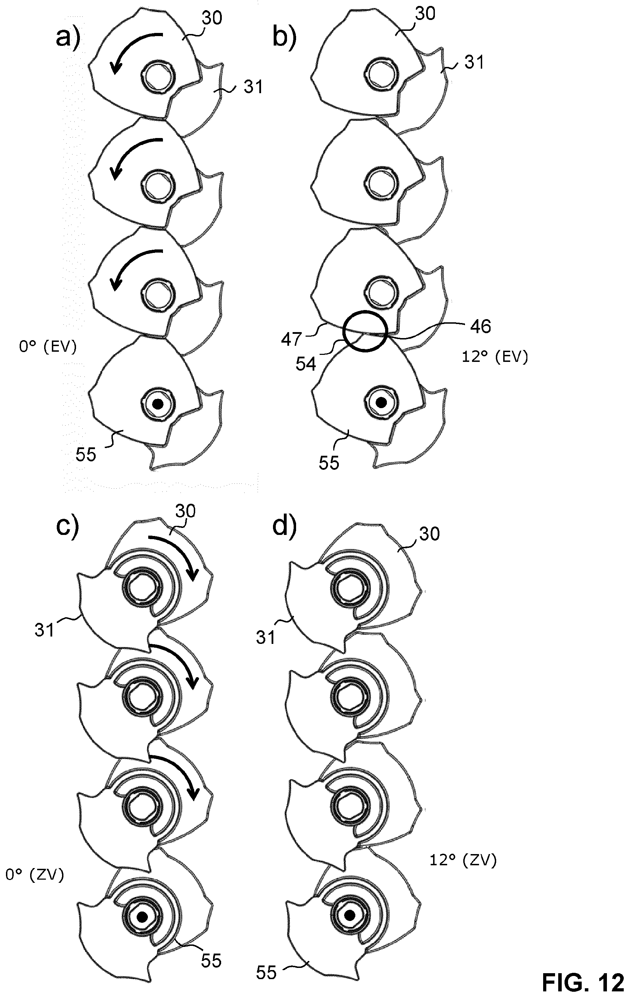

**Figur 12** zeigt nun, was geschieht, wenn ausgehend von der geschlossenen Position (0°), wenn die unterste Lamelle defekt ist und die entsprechende Scheibe 55 nicht mit dreht. Wie in Figur 12 a) angegeben beginnen die hier von der Seite der ersten Verriegelungsplatte 30 betrachteten Scheiben zur Öffnung im Gegenuhrzeigersinn (vergleiche Pfeile) zu drehen. Bei einer Position von ca. 12° (vergleiche Figur 12 b) kommt dann bereits der laterale Bereich 47 der zur Scheibe 55 benachbarten Scheibe in blockierende Anlage mit dem Blockierbereich 46 der ausgefallenen Scheibe 55.

Die Blockade erfolgt also quasi unmittelbar und nachdem nur 12° rotiert wurde. Die gleiche Schrittfolge ist in den Figuren 12c für die Sicht von der Seite der zweiten Verriegelungsplatte 31 dargestellt, entsprechend rotieren hier die Scheiben im Uhrzeigersinn.

**Figur 13** zeigt, was geschieht, wenn ausgehend von der geöffneten Position (85°) die Scheiben in Richtung zur geschlossenen Position gedreht werden, wiederum in den Figuren a) und b) von der Seite der ersten Verriegelungsplatte und in den Figuren c) und d) von der Seite der zweiten Verriegelungsplatte. Auch hier ist die unterste Scheibe 55 inaktiv. Die Blockade erfolgt hier, nachdem die oberen drei Scheiben um ca. 42° rotiert haben.

Es kommen dann der Blockierbereich 51 der untersten Scheibe und einer der lateralen Vorsprünge 35 der zweite untersten Scheibe in Kontakt und die drei oberen Scheiben werden so blockiert. Ausgehend von der offenen Position muss also weniger als ein Viertelzyklus durchlaufen werden, um schon in eine blockierte Situation zu laufen. Auch hier resultiert also eine sehr schnelle diagnostische Blockade.

In **Figur 14** wird dargestellt, was geschieht, wenn ausgehend von der halboffenen Position (42.5°) in die geschlossene Position (0°) gedreht wird, von der Seite der ersten Verriegelungsplatte, und in **Figur 15** das gleiche von der Seite der zweiten Verriegelungsplatte. Wie beim Übergang von a) zu b) ersichtlich geschieht zunächst nichts, bis die geschlossene Position (0°) erreicht wird. Die untere Scheibe dreht einfach nicht mit. Drehen nun die oberen Scheiben wieder zurück (vergleiche Figur c), so kommt ca. bei 45° der laterale Bereich 47 der zweite untersten Scheibe in Kontakt mit dem korrespondierenden lateralen Bereich 47 der untersten Scheibe in Kontakt und dreht dann schiebend die unterste Scheibe in eine andere Rotationsposition bei Erreichen der offenen Position (vergleiche Figur d).

Werden die drei oberen Scheiben nun wieder in Richtung geschlossene Position gedreht, so erfolgt die Verriegelung bei ca. 40° (vergleiche Figur e), wiederum, weil der laterale Vorsprung 35 der zweituntersten Scheibe blockierend auf den Blockierbereich 51 der untersten Scheibe 55 trifft.

Zu guter Letzt zeigen die **Figuren 16** **und** **17** das Verhalten der Scheiben, wenn ausgehend von der halboffenen Position (42.5°) zunächst in die geschlossene Position gedreht wird, und die unterste Scheibe 55 nicht mit dreht.

Hier wird nun die unterste Scheibe gleich zu Anfang nach Erreichen einer Position von ca. 45° durch Kontakt der benachbarten lateralen Bereiche 47 (vergleiche Figur b) mit gedreht und bis zur quasi offenen Position (vergleiche Figur c) geschoben. Wir dann wieder in Richtung offen gedreht mit den oberen drei Scheiben, so verriegeln sich die untersten beiden Scheiben wiederum über die Vorsprünge 35 und den Blockierbereich 51 (vergleiche Figur d).

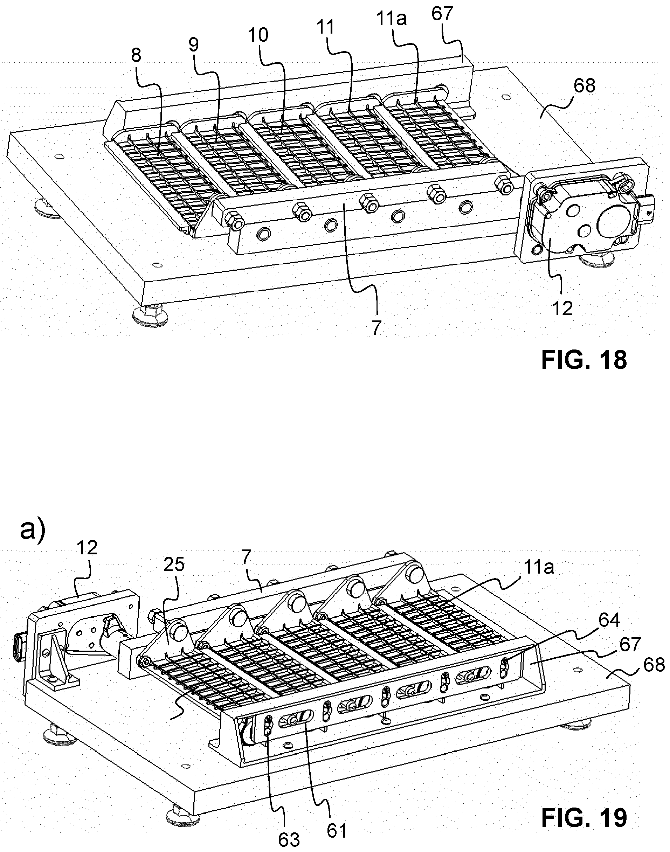

Durch die Formgebung der Scheiben wird entsprechend sichergestellt, dass nie mehr als ein ganzer Zyklus durchlaufen werden muss, bis eine Blockade sichergestellt ist, am Antriebsmotor der Scheiben entsprechend ein höheres Moment gemessen wird, und so über den Motor eine Diagnose über den Betriebszustand des Lamellenpakets möglich ist. **Figur 18** zeigt ein weiteres Ausführungsbeispiel einer Kühlerjalousie, diesmal mit fünf Lamellen. In einer perspektivischen Ansicht vom Motor 12 aus ist die Lagerung der Lamellen erkennbar. Der Motor treibt die Lamelle ganz rechts, das heisst die Lamelle 11a, direkt auf ihrer Drehachse an, und die vier darauffolgenden weiter links angeordneten Lamellen werden über eine Koppelstange 7 analog zu den bereits beschriebenen Ausführungsbeispielen mitgedreht, wenn der Motor die erste Lamelle 11a in Drehung versetzt. Dargestellt ist die geschlossene Position. Die ganze Kühlerjalousie ist hier zu Illustrationszwecken auf einer Montageplatte 68 angeordnet, sie wäre normalerweise in einem Gehäuse in einem vor dem Motor geschalteten Bauteil gelagert.

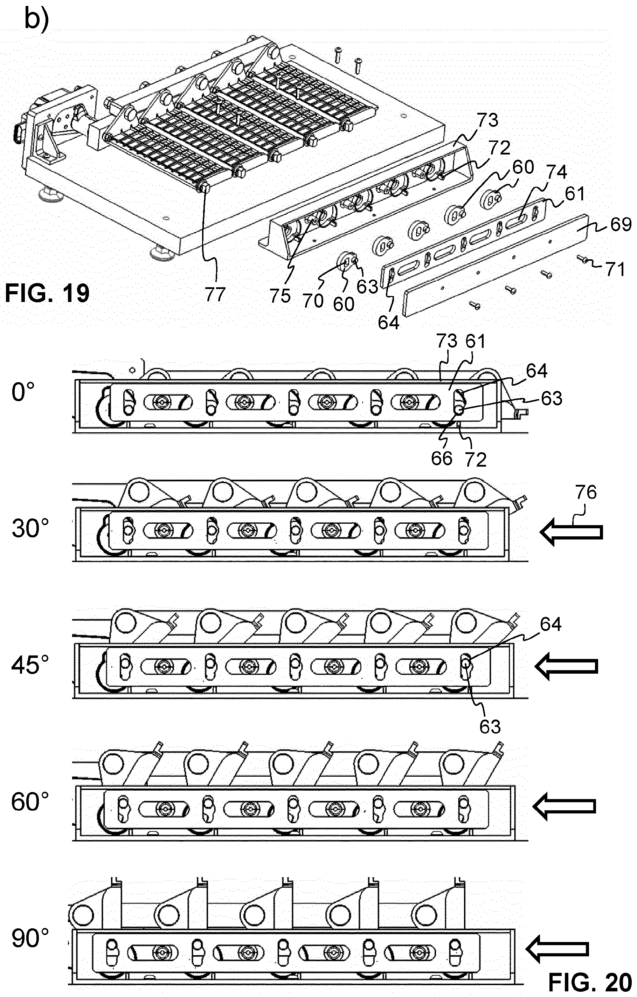

Gegenüber des Motors 12 ist ein Verriegelungsgehäuse 67 vorgesehen, in welchem die der Antriebsseite gegenüberliegenden Lagerungszapfen der Lamellen 8-11a gelagert sind. In **Figur 19** a) ist bei diesem Verriegelungsgehäuse 67 die Deckplatte 69 entfernt (vgl. Explosionsansicht gem. Fig. 19b), sodass der Einblick in dieses Verriegelungsgehäuse 67 freigegeben ist. Im Verriegelungsgehäuse kann nun die quer zur Ebene der Lamellen verlaufende Verriegelungsstange 61 erkannt werden, diese Verriegelungsstange kann nur parallel zur Ebene, die durch die Achsen der Lamellen aufgespannt wird, und senkrecht zur Verlaufsrichtung der Lamellenachsen im Gehäuse 67 verschoben werden.

Jeweils auf der Höhe jeder Lamelle gibt es eine senkrecht und zur Hauptverlaufsrichtung der Verriegelungsstange 61 verlaufende Verriegelungsausnehmung 64. In diese Verriegelungsausnehmungen 64 greifen Eingriffszapfen 63 ein. Diese Eingriffszapfen 63 sind auf Drehtellern 60 angeordnet. Diese Drehteller 60 verfügen über eine Aufnahmeöffnung 70, sie werden mit dieser Aufnahmeöffnung 70 auf die Lagerungszapfen der Lamellen verdrehgesichert aufgesteckt. Bei diesen Drehtellern 60 ist der Eingriffszapfen 63 jeweils exzentrisch zur Drehachse der Lamelle angeordnet, und die Drehteller 60 drehen mit den Lamellen mit, beispielsweise durch einen Formschluss zwischen dem jeweiligen Lagerungszapfen 77 und der jeweiligen Aufnahmeöffnung 70.

Alle Drehteller 60 sind mit ihrem Eingriffszapfen 63 in die gleiche Richtung ausgerichtet, und bei jedem Drehteller 60 zeigt der Eingriffszapfen 63 von den Lamellen in Richtung zur Verriegelungsstange 61.

Zur besseren Führung der Verriegelungsstange 61 verfügt diese über entlang ihrer Hauptverlaufsrichtung sich erstreckende parallele Langlöcher 74 zwischen den Verriegelungsausnehmungen 64 für die Eingriffszapfen 63. In diesen Langlöchern 74 gleiten Führungszapfen 75, die auf der hinteren Wand des Gehäuses vorgesehen sind. An der unteren Wand des Gehäuses sind untere Führungsstege 72 vorgesehen, und die Verriegelungsstange 61 ist zwischen dieser oberen Gehäusewand 73 und den Führungsstegen 72 so gefangen, dass sie nur entlang der in Figur 20 angegebenen Verschiebungsrichtung verschoben werden kann, respektive in die Gegenrichtung. Sie ist aber in dieser einen Richtung frei in diesem Gehäuse verschieblich.

In **Figur 20** ist nun dargestellt, wie, wenn alle Lamellen intakt sind und keine gebrochen, sich die verschiedenen Bauteile relativ zueinander bewegen. Ganz oben ist mit 0° die geschlossene Situation dargestellt, die Lamelle ganz links wird vom Motor angetrieben.

Wenn nun die Lamellen in die geöffnete Position bei 30° drehen, bewegen sich die Führungszapfen 63 alle synchron nach oben, und im Gegenuhrzeigersinn beschreiben sie bis zur völlig geöffneten Position einen Viertelkreis. Bei 30° wird erst wenig in Verschiebungsrichtung 76 verschoben, aber anschliessend bei 45° und bei der Weiterdrehung über 60° nach 90° wird die Verriegelungsstange 61 in Verschiebungsrichtung 76 mitgenommen. Beim Schliessen geschieht das gleiche wieder in umgekehrter Richtung, das heisst die Eingriffszapfen 63 beschreiben einen Vierteilkreis im Uhrzeigersinn. Die Verriegelungsstange 61 wird dabei bei der Bewegung von 0-90° in dieser Figur in die linke Richtung mitgenommen, wobei die Eingriffszapfen 63 von einer Position ganz unten in der entsprechenden Verriegelungsausnehmung 64 nach ganz oben wandern.

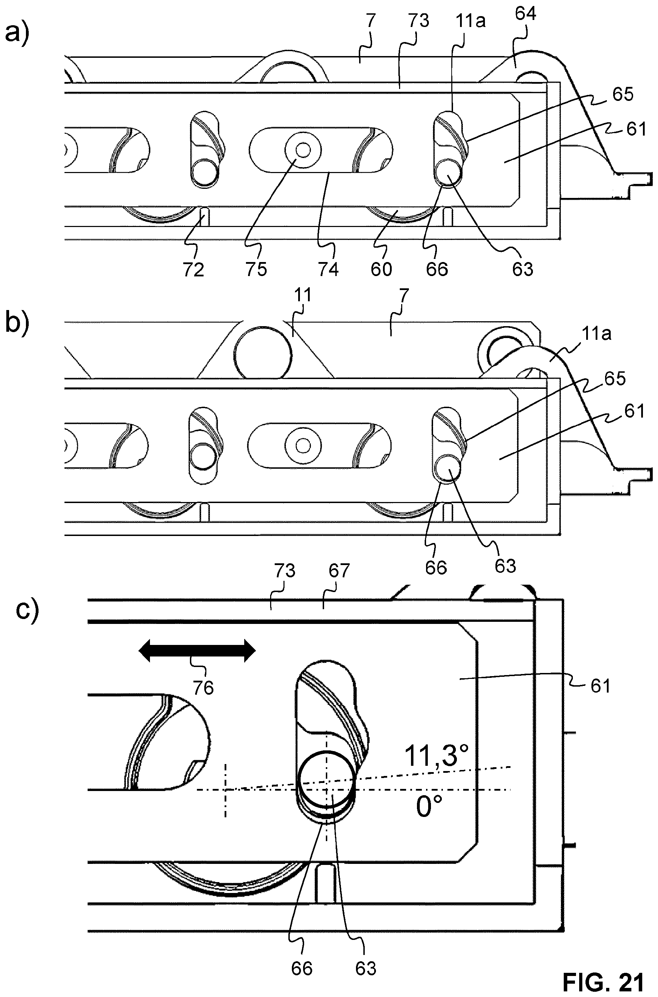

In **Figur 21a** ist nun die Ausgangssituation dargestellt für den Fall, dass die Lamelle 11a, das heisst die Lamelle ganz rechts, gebrochen ist. Begonnen wird bei hier dargestellten vollständig geschlossenen Position bei 0°, die Eingriffszapfen 63 befinden sich jeweils in der Verriegelungsausnehmung 64 in einem unteren Endbereich 66, der quasi einen Anschlag bildet, der aber normalerweise nicht erreicht wird.

Wird nun, wie dies in **Figur 21b** dargestellt ist, über den Motor das Lamellenpaket gedreht, die gebrochene Lamelle 11a dreht aber nicht mit, so bewegen sich die Eingriffszapfen 63 der intakten Lamellen nach oben in den Verriegelungsausnehmungen 64 und beginnen die Verriegelungsstange 61 nach links zu mitzunehmen. Da die hier ganz rechts dargestellte gebrochene Lamelle 11a nicht mitdreht, bleibt deren Eingriffszapfen 63 ganz unten im Endbereich 66 von deren Verriegelungsausnehmung 64, und weil dann der rechte Umfangbereich des Eingriffszapfens in klemmende Anlage mit der Innenkontur der Verriegelungsausnehmung unmittelbar unterhalb der Fangvertiefung 65 kommt, kann nun aber die Verriegelungsstange 61 nicht weiter nach links verschoben werden, und damit werden auch die Eingriffszapfen 63 der weiter links angeordneten Lamellen an ihrer weiteren Drehung gehindert, und damit auch die entsprechenden Lamellen. Der Motor 12 wird so blockiert und mithin erkannt, dass eine Lamelle gebrochen ist.

Diese Verriegelung funktioniert, wenn von der vollständig geschlossenen Position ausgegangen wird, bis zu einem Auslenkungswinkel von ca. 11,3°, wie dies in **Figur 21c** dargestellt ist. Solange mit anderen Worten die gebrochene Lamelle im Bereich zwischen 0° und ca. 11° als Ausgangsposition liegt, findet eine Verriegelung statt, wie sie in Figur 21b respektive c dargestellt ist.

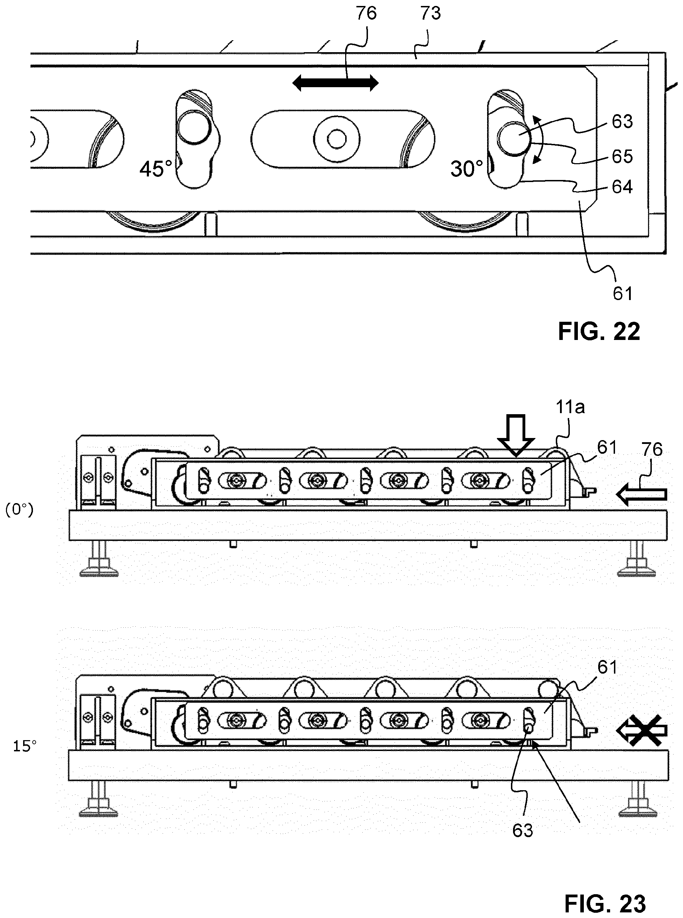

Wird ausgegangen von einer Ausgansposition von 30°, so wird, wie das in **Figur 22** erkennbar ist, die gebrochene Lamelle bei dieser Stellung bleiben, wird dann in der Fangvertiefung 65 quasi gefangen, worauf dann die weiter links mit 45° angezeigten Lamellen nicht mehr weiterdrehen können und damit das gesamte Lamellenpaket blockiert ist.

**Figur 23** zeigt die Situation des gesamten Pakets, wenn die Lamelle ganz rechts, das heisst die Lamelle 11a, gebrochen ist, und ausgegangen wird von der geschlossenen Situation, wie dies auch bereits schon oben besprochen wurde. Maximal kann nun das Lamellenpaket bis auf die unten dargestellte Position bei 15° gedreht werden, da bei dieser Position die weitere Verschiebung der Verriegelungsstange nach links durch den Eingriffszapfen 63 der Lamelle 11a ganz rechts blockiert ist.

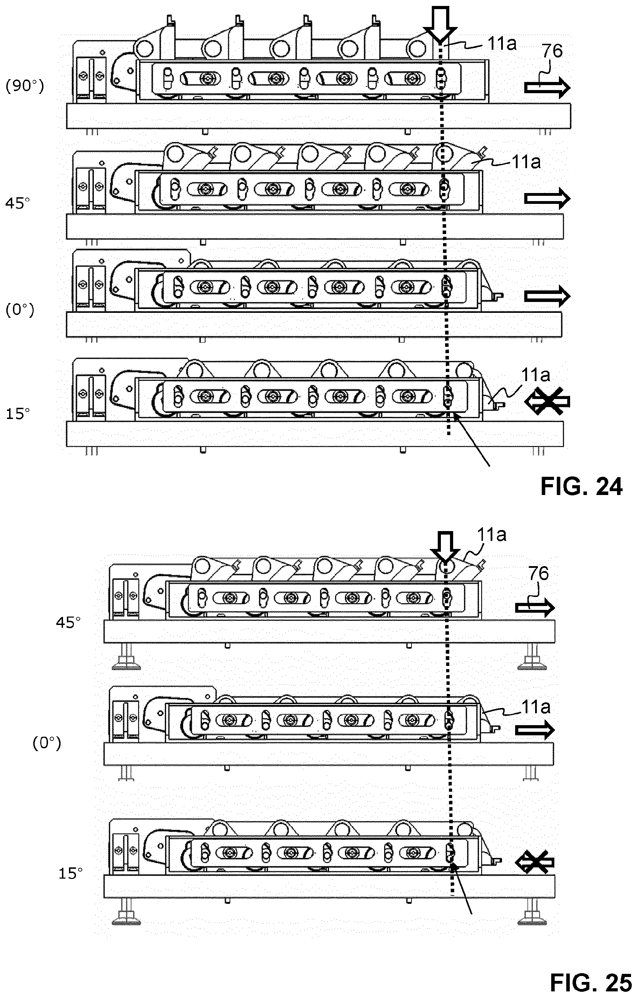

In **Figur 24** ist die Situation dargestellt, bei der die Lamelle ganz rechts, das heisst Lamelle 11a, gebrochen ist und ausgegangen wird von der ganz offenen Position. Hier drehen sich alle Lamellen mit, auch die gebrochene, bis die ganz geschlossene Position von 0° erreicht ist. Erst wenn nun in einem nächsten Öffnungsvorgang das Paket wieder geöffnet werden soll, blockiert das System, wiederum bei 15°, wie dies im Zusammenhang mit Figur 23 erläutert wurde.

**Figur 25** zeigt die Situation, wenn ausgegangen wird von der halb geöffneten Position (oben) von 45° und das Lamellenpaket geschlossen wird. Auch hier wird zunächst die gebrochene Lamelle bis zum geschlossenen Zustand (0°) mitgeführt, und erst, wenn anschliessend das Lamellenpaket wieder geöffnet werden soll, verriegelt die gebrochene Lamelle 11a das System bei 15°, wie dies bereits im Zusammenhang mit Figur 23 beschrieben wurde.

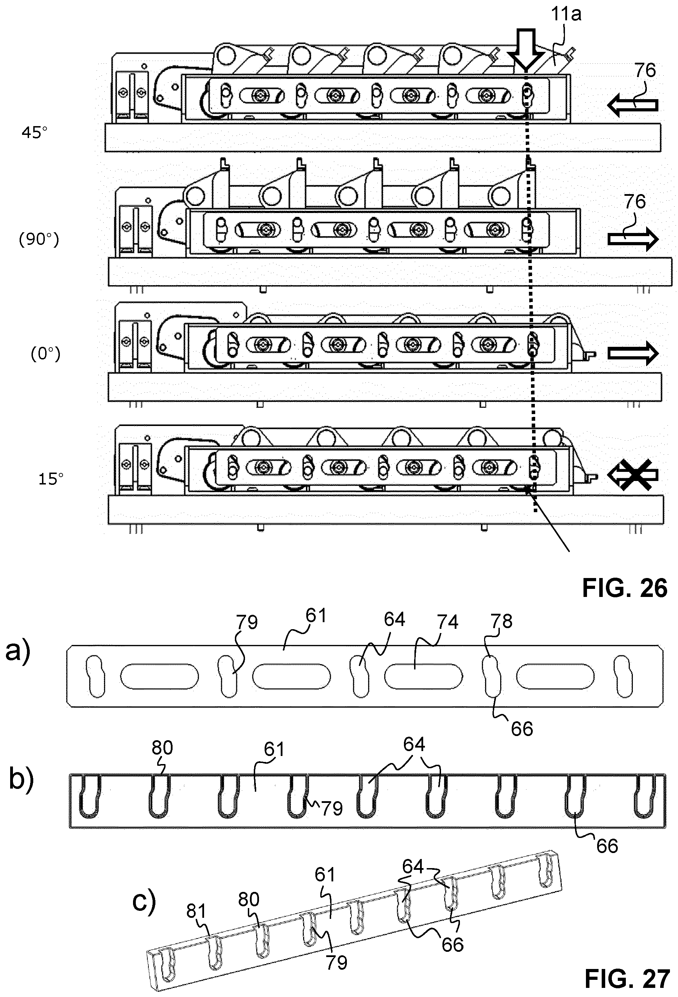

Zu guter Letzt zeigt **Figur 26** die Situation, wenn ausgegangen wird von einer halb offenen Position, hier 42,5° und das Lamellenpaket weiter geöffnet werden soll. Hier wird ebenfalls zunächst die gebrochene Lamelle ganz links 11a, mitgeführt bis auf die ganz offene Position, und erst, wenn dann wieder einmal vollständig geschlossen wurde, oder mindestens bis auf eine Position von 30° geschlossen wurde, und dann wieder geöffnet wird, wird die verriegelte, in Figur 26 ganz unten dargestellte Position, erreicht.

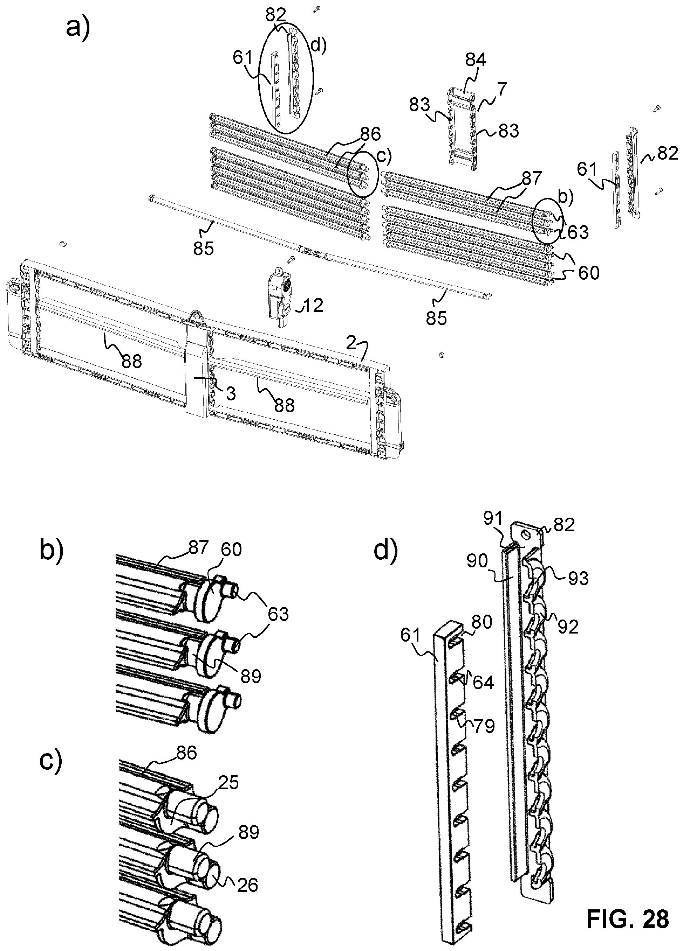

**Fig. 27** zeigt alternative Gestaltungen von Verriegelungsstangen 61. In Figur 27a) ist in einer seitlichen Ansicht eine Umsetzung dargestellt, bei welcher die Verriegelungsausnehmungen 64 nicht als einfache vertikale Schlitze ausgebildet sind mit einer seitlichen Fangvertiefung 65, die Verriegelungsausnehmungen 64 verfügen hier zwischen dem unteren Endbereich 66 und dem oberen Endbereich 78 über einen seitlichen Versatz 79. Der Versatz 79 hat dabei die gleiche Wirkung wie die Fangvertiefung 65, wenn eine Lamelle bei 0° stehen bleibt (vergleiche Figur 21), und die analoge Wirkung wie die Fangvertiefung 65, wenn eine Lamelle bei 30° stehen bleibt (vergleiche Figur 22). Der Vorteil der Ausbildung mit dem seitlichen Versatz 79 besteht einerseits darin, dass der Eingriffzapfen 63 jederzeit in der Kulisse der Verriegelungsausnehmung 64 seitlich geführt ist und niemals Spiel hat. Ein weiterer Vorteil besteht darin, dass, vergleiche zur Veranschaulichung die Situation bei Figur 22, wobei man sich eine entsprechende Verriegelungsausnehmung mit Versatz vorstellen muss, dass ausgehend von einer Blockade einer Lamelle bei 90° oder bis 45°, je nach Höhe des Versatzes sogar noch weiter, und bei einer versuchten Drehung der weiteren Lamellen Richtung 0° ebenfalls eine Verriegelung resultiert und eine entsprechende Rückmeldung einer Störung an den Motor. Eine weitere alternative Ausgestaltung einer Verriegelungsstange 61 ist in den Figuren 27b und c dargestellt. Damit die Lamellen nach einlegen der Verriegelungsstange 61 eingesetzt werden können (vergleiche auch Figur 28) kann es von Vorteil sein, wenn die Verriegelungsausnehmungen 64 oben oder unten offen sind. Die offene Seite wird anschließend durch ein weiteres Bauteil (in Figur 28 die Abdeckung) geschlossen. Weiter ist es nicht erforderlich, dass die Verriegelungsausnehmungen 64 als Durchgangsöffnungen ausgestaltet sind. Sie können, wie dies im Zusammenhang mit dieser Ausführungsform illustriert ist, auch als Nuten ausgebildet sein, d. h. auf der den lamellenabgewandten Seite verfügt die Verriegelungsstange 61 über eine geschlossene Rückwand 81 oder einen Nutboden. Aus Stabilitätsgründen, insbesondere dann, wenn die Verriegelungsausnehmungen 64 einseitig offen sind, kann das von Vorteil sein.

Fig. 28zeigt eine weitere Kühlerjalousie mit Verriegelungselementen. In diesem Fall werden zwei Lamellenpakete über einen zentral angeordneten Motor 12 angetrieben und gesteuert. Der Rahmen 2 verfügt hier über einen vertikalen Zwischensteg 3, der nicht nur der bereits oben beschriebenen Lagerung der Lamellen dient, sondern auch der Aufnahme des Motors 12. Im Gegensatz zu den oben beschriebenen Beispielen erstrecken sich die Lamellen auch nicht über die gesamte Breite des Rahmens, sondern in den beiden seitlich des vertikalen Zwischenstegs angeordneten Ausnehmungen sind zwei individuelle Lamellenpakete angeordnet, eine erste Gruppe von Lamellen 86 im wie dargestellt linken Bereich und eine zweite Gruppe von Lamellen 87 im wie dargestellt rechten Bereich.

Der in Fahrtrichtung geschützt hinter dem vertikalen Zwischensteg 3 angeordnete Motor 12 treibt die beiden Lamellenpakete 86/87 gemeinsam und synchron an, in dem der Motor eine Lamelle oder eine Übertragungswelle 85 (vergleiche Diskussion weiter unten) antreibt, und die weiteren Lamellen über das gemeinsame Kupplungselement 7 bewegt werden. Zu diesem Zweck verfügt das Kupplungselement 7 über zwei Kopplungsbereiche 83 und einen dazwischenliegenden Überbrückungsbereich 84. Jeweils auf der Außenseite im Rahmen sind dann die bereits oben beschriebenen Verriegelungselemente vorgesehen, wiederum in Form jeweils einer Verriegelungsstange 61, die über Drehteller 60, die an der jeweiligen Lamelle 86/87 vorgesehen sind, mit daran befestigten oder einstückig damit ausgebildeten exzentrischen Eingriffzapfen 63. Diese Eingriffzapfen 63 greifen in die Nuten der Verriegelungsstange 61 ein, wobei es sich um jeweils eine Verriegelungsstange 61 handelt, wie sie weiter oben im Zusammenhang mit Figur 27 b) und c) bereits beschrieben worden ist. Es handelt sich mit anderen Worten um eine Verriegelungsstange 61, bei der die Nuten nach oben oder besser hier in Fahrtrichtung hinten offen sind. Diese Bauweise erlaubt es, den Rahmen quasi von hinten zu bestücken, in dem zunächst die Verriegelungsstangen 61 eingelegt werden, dann die Lamellen, und am Ende über die Abdeckungen 82, die beispielsweise mit den dargestellten Schrauben befestigt werden, geschlossen werden. Auch hier sind die Verriegelungsstangen dann so gelagert, dass sie nur entlang ihrer Hauptverlaufsrichtung verschoben werden können.

Bei derartigen Lamellenpaketen mit vergleichsweise vielen Lamellen wird aus Gewichtsgründen und aus Gründen des möglichst großen Strömungsquerschnitts bei geöffneten Lamellen eine dünne Ausgestaltung der Lamellen bevorzugt. Dies kann dazu führen, dass die Torsionsstabilität der Lamellen nicht mehr genügt, wenn eine Lamelle ausfällt und blockiert. Es kann dann vorkommen, dass zwar auf der dem Motor abgewandten Seite die Rotation der Lamellen blockiert wird, dass diese Blockierung aber nicht auf die Motorseite und damit als Rückmeldung an den Motor geleitet wird, weil die Lamellen einfach durch den Motor verdreht werden können.

Bei diesem Ausführungsbeispiel wird diese Problematik gelöst, indem es im Rahmen 2 jeweils einen horizontalen Zwischensteg 88 gibt, der auf der gleichen Höhe wie die Lamellen angeordnet ist. Auf der vertikalen Höhe dieses Zwischenstegs 88 und hinter diesem geschützt ist auf beiden Seiten im Rahmen nicht eine Lamelle, sondern eine Übertragungswelle 85 angeordnet, die eine genügende Torsionsstabilität aufweist. Diese Übertragungswelle 85 ist ebenfalls gleich wie die Lamellen an die Verriegelungsstange 61 angekoppelt, und wenn über die Verriegelungsstange 61 eine Blockierung erfolgt, dann wird auch diese Übertragungswelle 85 blockiert. Entweder ist nun diese Übertragungswelle 85 auch gleich jenes Element, das an den Motor 12 angekoppelt ist und die Koppelstange 7 betätigt, dann wird die Rückmeldung bei einer Blockierung direkt an den Motor zurückgegeben. Wenn die Übertragungswelle 85 nicht direkt an den Motor angekoppelt ist, sondern über die Koppelstange 7, so erfolgt die Rückkopplung mittelbar über diese Koppelstange 7. Eine entsprechende Absicherung der Rückmeldung kann aber auch auf andere Weise erfolgen, beispielsweise darüber, dass eine Lamelle speziell hinsichtlich Torsionsstabilität ausgebildet wird.

Figur 28 b) zeigt in einem Detail gemäß Ausschnitt in a) die detaillierte Ausgestaltung der Seite der Lamellen 87, bei der die Drehteller 60 angeordnet sind. Die Drehteller 60 sind in diesem Fall einstückig mit den Lamellen 87 ausgebildet und mit diesem über die Lagerungszapfen 89 verbunden. Im jeweiligen Drehteller 60 ist exzentrisch jeweils ein Eingriffzapfen 63 vorgesehen.

Figur 28 c) zeigt in einem Detail gemäß Ausschnitt in a) die detaillierte Ausgestaltung der Seite der Lamellen 86, bei der die Ankopplung an den Motor 12 erfolgt. Die Lagerungszapfen 89 sind auf der Achse angeordnet und lagern in entsprechenden Ausnehmungen im vertikalen Zwischensteg 3 des Rahmens 2. Über einen Kopplungshebel 25 ist jeweils ein Kopplungszapfen 26 vorgesehen, der in entsprechende Ausnehmungen in der Koppelstange 7 eingreift. Auch hier sind Kopplungshebel und Kopplungszapfen einstückig mit der Lamelle ausgebildet.

Figur 29 d) zeigt in einem Detail gemäß Ausschnitt in Figur 28 a) die Verriegelungsstange 61 mit den Verriegelungsausnehmungen 64, die in dieser Darstellung nach hinten offen mit einer Einschuböffnung 80 ausgebildet sind, und die ungefähr auf halber Höhe einen seitlichen Versatz 79 aufweisen, wie oben beschrieben. Auf diese Verriegelungsstange 61 wird die Abdeckung 82 aufgesetzt und dann mit dem Rahmen verbunden. Die Abdeckung 62 verfügt über eine Rückwand 90, die die Verriegelungsstange 61 auf dieser Seite führt, sowie über eine Abdeckwand 91, die die obere Einschuböffnung 80 verschließt, wenn die Abdeckung aufgesetzt und im Rahmen befestigt ist. In der den Lamellen zugewandten vorderen Wand dieser Abdeckung gibt es nun Konturen 92, in denen jeweils Ausnehmungen 93 für die Lagerungszapfen 89 vorgesehen sind, und hinter denen die Drehteller 60 der Lamellen gefangen sind. Diese Konturen stellen sicher, dass, sollte eine Lamelle ausbrechen, diese dann im Bereich des entsprechenden Lagerungszapfens 89 zwischen der eigentlichen Lamelle und dem Drehteller 60 bricht, und damit auch bei ausgebrochene Lamelle der Drehteller im Rahmen verbleibt und die Kopplung zur Verriegelungsstange 61 sicherstellt. Ohne diese Maßnahme wäre es möglich, dass eine Lamelle zusammen mit dem Drehteller ausbricht und entsprechend dann auch über die Verriegelungsstange 61 keine Verriegelung mehr erfolgen kann, weil ein Drehteller nicht mehr mit dreht.

**BEZUGSZEICHENLISTE**

| | | | |
|---|---|---|---|
| 1 | Kühlerjalousie | 8 | erste Lamelle |
| 2 | Rahmen | 8' | Lagerungszapfen von 8 |
| 3 | vertikaler Zwischensteg | 8" | Zwischenlager von 8 |
| 4 | seitlicher Befestigungsbereich von 2 | 8‴ | Lagerungskopf von 8 |
| | | 9 | Antriebslamelle |
| 5 | Lagerungsbereich von 2 | 9' | Lagerungszapfen von 9 |
| 6 | Motorbereich von 6 | 9" | Zwischenlager von 9 |
| 7 | Koppelstange | 9‴ | Lagerungskopf von 9 |
| 10 | dritte Lamelle | 33 | Einschnittbereich von 30 |
| 10' | Lagerungszapfen von 10 | 34 | gekappte Bereiche wegen Prototypen-Bau |
| 10" | Zwischenlager von 10 | | |
| 10‴ | Lagerungskopf von 10 | 35 | laterale Vorsprünge an 31 |
| 11 | vierte Lamelle | 36 | Minimalabstand |
| 11' | Lagerungszapfen von 11 | 37 | Rahmenöffnung |
| 11" | Zwischenlager von 11 | 38 | Spiegelebene |
| 11‴ | Lagerungskopf von 11 | 39 | Verstärkungen |
| 11a | fünfte Lamelle | 40 | Achsloch |
| 12 | Motor | 41 | plane Flanke für |
| 13 | antriebsseitige Lagerung von 8-11 | 42 | Drehversicherung Aussparung |
| 14 | antriebsabgewandte Lagerung von 8-11 | 43 | Gleitstege |
| | | 44 | umlaufender Flansch auf der Seite der zweiten Verriegelungsplatte |
| 15 | Motoraufnahme | | |
| 16 | Abdeckung von 3 | | |
| 17 | Deckbereich von Lamelle, Lamellenblatt | 45 | umlaufender Flansch auf der Seite der ersten |
| 18 | OBD-Scheibe von 8 | | Verriegelungsplatte |
| 19 | OBD-Scheibe von 9 | 46 | Blockierbereich von 30 |
| 20 | OBD-Scheibe von 10 | 47 | lateraler Bereich von 30 |
| 21 | OBD-Scheibe von 11 | 48 | Einschnittbereich von 30 |
| 22 | gekapselter Raum für 18-21 | 49 | Übergangsbereich von 30 |
| 23 | Trennwand von 22 | 50 | kreiszylindrischer Bereich von 31 |
| 24 | Kopplungsnut in 7 | | |
| 25 | Kopplungshebel von Lamelle | 51 | Blockierbereich von 31 |
| 26 | Kopplungszapfen an 25 | 52 | erster Übergangsbereich von 31 |
| 27 | Durchgangsöffnung für | | |
| | Lagerungszapfen in 23 | 53 | zweiter Übergangsbereich von 31 |
| 28 | Achse von 18-21 | | |
| 29 | Führungskragen | 54 | blockierende Kollision |
| 30 | erste Verriegelungsplatte von 18-21 | 55 | "ausgefallene" OBD-Scheibe |
| | | 56 | Kontakt ohne Verriegelung |
| 31 | zweite Verriegelungsplatte von 18-21 | 60 | Drehteller |
| | | 61 | Verriegelungsstange |
| 32 | ausladender Bereich von 30 | 62 | Verriegelungsführung, |
| | Verriegelungsgehäuse | | Verriegelungsausnehmung |
| 63 | Eingriffzapfen | 79 | seitlicher Versatz der Verriegelungsausnehmung |
| 64 | Verriegelungsausnehmung in 61 | | |
| | | 80 | obere Einschuböffnung der Verriegelungsausnehmung |
| 65 | Fangvertiefung | | |
| 66 | unterer Endbereich der Verriegelungsausnehmung | 81 | geschlossene Rückwand von Verriegelungsausnehmung |
| 67 | Verriegelungsgehäuse | 82 | Abdeckung |
| 68 | Montageplatte | 83 | Kopplungsbereich von 7 |
| 69 | Deckplatte | 84 | Überbrückungsbereich von 7 |
| 70 | Aufnahmeöffnung in 60 für Lagerungszapfen von Lamelle | 85 | Übertragungswelle |
| | | 86 | Lamellen des linken Bereichs |
| | | 87 | Lamellen des rechten Bereichs allgemein |
| 71 | Befestigungsschrauben | | |
| 72 | untere Führungsstege | 88 | horizontaler Zwischensteg |
| 73 | obere Gehäusewand | 89 | Lagerungszapfen von 86/87 |
| 74 | paralleles Langloch zur Führung | 90 | Rückwand von 82 |
| | | 91 | Abdeckwand von 82 |
| 75 | Führungszapfen zum Eingriff in 74 | 92 | Konturen in Vorderwand von 82 zur Aufnahme von 60 |
| 76 | Verschiebungsrichtung von Verriegelungsstange | 93 | Ausnehmung in 92 für 89 |
| 77 | Lagerungszapfen der Lamelle | EV | erste Verriegelungsplatte, 30 |
| | | ZV | zweite Verriegelungsplatte, 31 |
| 78 | oberer Endbereich der | | |

## Patentansprüche

1. Kühlerjalousie (1), insbesondere für ein Automobil zur kontrollierten Belüftung des Motors,
mit einem Rahmen (2) in welchem wenigstens zwei Lamellen (8-11) derart drehbar gelagert sind, dass sie von
einer vollständig geschlossenen Position (ca. 0°), in welcher die Lamellenblätter (17) der Lamellen (8-11) im Wesentlichen parallel zur Rahmenebene angeordnet sind, und im aneinander grenzenden Bereich entweder teilweise überlappen oder dicht aneinander liegen, sodass die Rahmenöffnung (37) im Wesentlichen für den Luftdurchfluss geschlossen ist,
in eine geöffnete Position (ca. 90°), in welcher die Lamellenblätter (17) der Lamellen (8-11) im Wesentlichen senkrecht zur Rahmenebene angeordnet sind, sodass die Rahmenöffnung (37) im Wesentlichen maximal für den Luftdurchfluss geöffnet ist,
verschwenkbar sind,
wobei die Lamellen (8-11) an zwei gegenüberliegenden Seiten des Rahmens in Lagerstellen gelagert sind,
wobei im oder am Rahmen auf einer Motorseite (6) des Rahmens ein Motor (12) vorgesehen ist, welcher eine einzige Lamelle (9) antreibt, und wobei auf der gleichen Motorseite (6) des Rahmens ein Kopplungselement (7) vorgesehen ist, welches die Drehung der angetriebenen Lamelle (9) synchron überträgt auf die weiteren Lamellen (8,10-11),
und wobei auf der der Motorseite (6) des Rahmens (2) abgewandten Lagerungsseite (5) des Rahmens im Bereich der dort vorgesehenen Lagerung der Lamellen (8-11) für jede Lamelle ein Verriegelungselement (18-21,60,63) vorgesehen ist, und wobei die Verriegelungselemente (18-21,60,63) derart direkt oder indirekt gekoppelt sind, dass, wenn wenigstens eines der Verriegelungselemente (18-21,60,63) nicht synchron mit allen anderen Verriegelungselementen (18-21,60,63) dreht, die Drehbewegung der Verriegelungselemente (18-21,60,63) in wenigstens eine Richtung blockiert wird, vorzugsweise kraft- und/oder formschlüssig
**dadurch gekennzeichnet, dass**
die Verriegelungselemente als Verriegelungsscheiben (18-21,60,63) oder als Verriegelungselemente (60,63) mit wenigstens einem bezüglich der Drehachse der Lamellen (8-11) radial versetzten Eingriffzapfen (63) ausgebildet sind,
wobei der Eingriffzapfen (63) parallel zur Drehachse der Lamellen (8-11) verläuft und bei Drehung der Lamelle mit dieser synchron eine kreisbogenförmige Bewegung vollzieht, und wobei die Eingriffzapfen (63) aller Verriegelungselemente (60) über eine gemeinsame, senkrecht zur Achse der Lamellen verlaufende Verriegelungsstange (61) gekoppelt sind, und wobei die Verriegelungsscheiben (18-21) eine Form aufweisen, welche, wenn wenigstens eine der Verriegelungsscheiben nicht synchron mit allen anderen Verriegelungsscheiben (18-21) dreht, die Drehbewegung der Verriegelungsscheiben kraft- und/oder formschlüssig blockiert.

2. Kühlerjalousie (1) nach Anspruch 1, **dadurch gekennzeichnet, dass** im Rahmen wenigstens drei, vorzugsweise wenigstens vier, insbesondere bevorzugt genau vier Lamellen parallel gelagert sind, und vorzugsweise jede der Lamellen eine Verriegelungsscheibe aufweist.

3. Kühlerjalousie (1) nach einem der vorhergehenden Ansprüche, **dadurch gekennzeichnet, dass** das jeweilige Verriegelungselement (18-21,60,63), insbesondere in Form einer Verriegelungsscheibe (18-21), mit der zugehörigen Lamelle (8-11) in beide Drehrichtungen gekoppelt ist, und wobei die Verriegelungselemente (18-21,60,63) respektive Verriegelungsscheiben vorzugsweise jeweils wenigstens eine im Wesentlichen senkrecht zur jeweiligen Lamellenachse angeordnete Verriegelungsplatte (30,31) aufweisen, wobei vorzugsweise wenigstens eine erste Verriegelungsplatte (30) in einem ersten Umfangbereich (32) einen größeren Radius aufweist als in einem zweiten, vorzugsweise im wesentlichen gegenüberliegenden Umfangbereich (33).

4. Kühlerjalousie (1) nach einem der vorhergehenden Ansprüche 3 oder 4, **dadurch gekennzeichnet, dass** es zwei, in Bezug auf die Achse (28) der Verriegelungsscheibe (18-21) versetzte, vorzugsweise anliegende, vorzugsweise jeweils spiegel-symmetrische Verriegelungsplatten (30,31) gibt, wobei insbesondere jede dieser Verriegelungsplatten einen ersten Umfangbereich mit einem größeren Radius und einen zweiten Umfangbereich mit einem geringeren Radius aufweist, wobei vorzugsweise die Umfangbereiche mit jeweils größerem Radius der beiden Verriegelungsplatten (30,31) bezüglich Achse der Verriegelungsscheibe gegenüberliegend angeordnet sind, und wobei bevorzugt eine zweite Verriegelungsplatte (31) im Umfangbereich mit größerem Radius bevorzugt zwei seitliche laterale Vorsprünge (35) aufweist,
und/oder **dadurch gekennzeichnet, dass** wenigstens eine, vorzugsweise alle der Verriegelungsscheiben (18-21) spiegelsymmetrisch bezüglich einer Spiegelebene (38) ausgebildet sind, welche Spiegelebene (38) die Achse (28) einschließt
und/oder **dadurch gekennzeichnet, dass** im nicht-verriegelten Betriebszustand zwischen den Verriegelungsscheiben (18-21) stets ein Minimalabstand (36) beibehalten wird, wobei dieser Minimalabstand vorzugsweise im Bereich von 0.1-5 mm, oder 0.1-4 mm, oder 0.1-1 mm, insbesondere im Bereich von 0.25-0.75 mm liegt.

5. Kühlerjalousie (1) nach Anspruch 1, **dadurch gekennzeichnet, dass** die Eingriffzapfen (63) in der Verriegelungsstange (61) in Verriegelungsausnehmungen (64) laufen.

6. Kühlerjalousie nach dem vorhergehenden Anspruch, **dadurch gekennzeichnet, dass** die Verriegelungsausnehmungen (64) als Langloch oder längliche Aussparung (64), als Durchgangsöffnung oder als Nut, ausgestaltet sind, deren längere Achse senkrecht zur Hauptverlaufsrichtung der Verriegelungsstange (61) verläuft, und wobei die Verriegelungsstange (61) weiter bevorzugt derart gelagert ist, dass sie im wesentlichen nur entlang ihrer Hauptverlaufsrichtung verschoben werden kann, nicht aber in einer Richtung senkrecht dazu.

7. Kühlerjalousie nach einem der vorhergehenden Ansprüche, **dadurch gekennzeichnet, dass** die Eingriffzapfen (63) in der vollständig geschlossenen Position oder in der vollständig geöffneten Position in Hauptverlaufsrichtung der Verriegelungsstange (61) bezüglich der Drehachse der jeweiligen Lamelle (8-11) im wesentlichen maximal ausgelenkt sind, und bei der Rotation in die vollständig geöffnete respektive die vollständig geschlossene Position in eine Position drehen, bei welcher sie in Hauptverlaufsrichtung der Verriegelungsstange (61) im wesentlichen auf der Höhe der Drehachse der jeweiligen Lamelle (8-11) liegen, und wobei vorzugsweise die Eingriffzapfen (63) bei der vollständig geöffneten respektive vollständig geschlossenen Position jeweils in einen Endbereich (66) des Langlochs oder der länglichen Aussparung (64) zu liegen kommen,
wobei vorzugsweise das Langloch oder die längliche Aussparung (65) in Richtung der maximalen Auslenkung der Eingriffzapfen (63) jeweils eine Fangvertiefung (66) oder einen seitlichen Versatz (79), vorzugsweise auf halber Höhe des Langlochs respektive der länglichen Aussparung (65), aufweist,
und/oder **dadurch gekennzeichnet, dass** die Verriegelungsstange (61) in einer Verriegelungsführung (62) derart geführt ist, dass sie nur in einer einzigen Richtung senkrecht zu den Drehachsen der Lamellen (8-11) aber nicht in Richtung der Normalen zur Ebene, die durch die Drehachsen der Lamellen (8-11) aufgespannt wird, verschoben werden kann.

8. Kühlerjalousie (1) nach einem der vorhergehenden Ansprüche, **dadurch gekennzeichnet, dass** die Verriegelungselemente (60,63), vorzugsweise in Form von Verriegelungsscheiben (18-21), als von den Lamellen separate Bauteile ausgebildet sind, in welche vorzugsweise Lagerungszapfen der Lamellen nur drehgesichert eingeschoben sind.

9. Kühlerjalousie (1) nach einem der vorhergehenden Ansprüche, **dadurch gekennzeichnet, dass** die Verriegelungselemente (60,63), vorzugsweise in Form von Verriegelungsscheiben (18-21), sowie eine gegebenenfalls vorhandene Verriegelungsstange (61), in einem durch eine Trennwand (23) von der Durchgangsöffnung (27) des Rahmens (2) getrennten gekapselten Bereich (22) des Rahmens angeordnet sind, und wobei vorzugsweise Lagerungszapfen der Lamellen durch Durchgangsöffnungen (27) in der Trennwand (23) hindurchgreifen.

10. Kühlerjalousie (1) nach einem der vorhergehenden Ansprüche, **dadurch gekennzeichnet, dass** die Lamellen eine Länge von wenigstens 10 cm, oder wenigstens 20 cm, oder wenigstens 50 cm, vorzugsweise von mehr als 60 cm oder mehr als 1 m, insbesondere bevorzugt von im Bereich von 10 - 150 cm oder 20 - 120 cm, oder auch im Bereich von 1,2-2 m aufweisen, und wobei insbesondere vorzugsweise im Rahmen ein vertikaler zwischen Steg (3) vorgesehen ist, welcher Zwischenlager-Bereiche der Lamellen lagert.

11. Kühlerjalousie (1) nach Anspruch 10 **dadurch gekennzeichnet, dass** die Lamellen im Inneren einen herstellungsbedingten sich entlang der Achse der jeweiligen Lamelle erstreckenden Hohlraum aufweisen.

12. Kühlerjalousie (1) nach einem der vorhergehenden Ansprüche, **dadurch gekennzeichnet, dass** das Kopplungselement als Koppelstange (7) ausgebildet ist, wobei vorzugsweise der Motor die angetriebenen Lamelle (9) direkt über ihre Achse antreibt, und die Koppelstange (7), die vorzugsweise parallel zur Rahmenebene angeordnet ist und senkrecht zu den Achsen der Lamellen, über einen Kopplungshebel (25) bewegt wird, und die anderen Lamellen (8,10-11) über entsprechende an die Koppelstange (7) angekoppelte Kopplungshebel (25) synchron bewegt werden.

13. Verfahren zum Betrieb respektive der Ansteuerung einer Kühlerjalousie nach einem der vorhergehenden Ansprüche, **dadurch gekennzeichnet, dass** die Steuerung des Motors (12) derart ausgelegt ist, dass eine Fehlermeldung ausgegeben wird, wenn der Motor wegen Verriegelung der Verriegelungselemente (60,63), vorzugsweise in Form von Verriegelungsscheiben, auf eine verriegelte Anschlagsposition fährt, die nicht der geschlossenen oder der geöffneten Endposition der Lamellen entspricht, wobei vorzugsweise das Erreichen einer solchen verriegelten Anschlagsposition über eine Erhöhung des vom Motor erzeugten Drehmoments erfasst wird.

14. Verfahren zur Herstellung einer Kühlerjalousie (1) nach einem der vorhergehenden Ansprüche 1-12, **dadurch gekennzeichnet, dass** Rahmen, Lamellen und die Verriegelungselemente (60,63), vorzugsweise in Form von Verriegelungsscheiben und/oder Verriegelungsstangen (61), individuell aus einem thermoplastischen Material, vorzugsweise aus einem glasfaserverstärkten thermoplastischen Material, insbesondere bevorzugt aus glasfaserverstärktem thermoplastischem Polyamid in einem Spritzgussverfahren hergestellt werden, und anschließend zur Kühlerjalousie (1) zusammengesetzt werden.

15. Verwendung einer Kühlerjalousie (1) nach einem der vorhergehenden Ansprüche 1-12 in einem Transportmittel, insbesondere in einem Automobil, zur gezielten Luftzuführung zu einem Motor, einem Motorbestandteil, einem Energiespeicher oder einem anderen wärmeerzeugenden Bauteil.

## Claims

1. Cooling louvre (1), in particular for an automobile for controlled ventilation of the engine,
with a frame (2) in which at least two discs (8-11) are rotatably mounted in such a way that they can be moved by
a completely closed position (approx. 0°), in which the louvre blades (17) of the louvres (8-11) are arranged substantially parallel to the frame plane and either partially overlap or lie close together in the adjacent area, so that the frame opening (37) is substantially closed to the air flow,
into an open position (approx. 90°), in which the blades (17) of the louvres (8-11) are arranged essentially perpendicular to the frame plane, so that the frame opening (37) is essentially maximally open for the air flow,
can be swivelled,
whereby the discs (8-11) are mounted in bearings on two opposite sides of the frame,
wherein a motor (12) is provided in or on the frame on a motor side (6) of the frame, which drives a single slat (9), and wherein a coupling element (7) is provided on the same motor side (6) of the frame, which synchronously transmits the rotation of the driven slat (9) to the other slats (8, 10-11),
and wherein a locking element (18-21, 60, 63) is provided for each slat on the mounting side (5) of the frame (2) facing away from the motor side (6) of the frame (2) in the region of the mounting of the slats (8-11) provided there, and wherein the locking elements (18-21, 60, 63) are coupled directly or indirectly in such a way that, if at least one of the locking elements (18-21, 60, 63) does not rotate synchronously with all the other locking elements (18-21, 60, 63), the rotational movement of the locking elements (18-21, 60, 63) is blocked in at least one direction, preferably in a force-locking and/or form-locking manner
**characterised in that**
the locking elements are designed as locking discs (18-21, 60, 63) or as locking elements (60, 63) with at least one engagement pin (63) that is radially offset with respect to the axis of rotation of the discs (8-11),
wherein the engagement pin (63) extends parallel to the axis of rotation of the discs (8-11) and performs an arcuate movement synchronously with the disc when the disc rotates, and wherein the engagement pins (63) of all locking elements (60) are coupled via a common locking rod (61) extending perpendicular to the axis of the discs, and wherein the locking discs (18-21) have a shape which, if at least one of the locking discs does not rotate synchronously with all the other locking discs (18-21), blocks the rotary movement of the locking discs in a force-locking and/or form-locking manner .

2. Cooling louvre (1) according to claim 1, **characterised in that** at least three, preferably at least four, in particular preferably exactly four slats are mounted in parallel in the frame, and preferably each of the slats has a locking disc.

3. Cooling louvre (1) according to one of the preceding claims, **characterised in that** the respective locking element (18-21, 60, 63), in particular in the form of a locking disc (18-21), is coupled to the associated slat (8-11) in both directions of rotation, and wherein the locking elements (18-21, 60,63) or locking discs preferably each have at least one locking plate (30, 31) arranged substantially perpendicular to the respective slat axis, at least one first locking plate (30) preferably having a larger radius in a first circumferential region (32) than in a second, preferably substantially opposite circumferential region (33).

4. Cooling louvre (1) according to one of the preceding claims 3 or 4, **characterised in that** there are two locking plates (30, 31) which are offset in relation to the axis (28) of the locking disc (18-21), preferably abutting, preferably each mirror-symmetrical, wherein in particular each of these locking plates has a first peripheral region with a larger radius and a second peripheral region with a smaller radius, wherein preferably the circumferential regions each having a larger radius of the two locking plates (30, 31) are arranged opposite one another with respect to the axis of the locking disc, and wherein preferably a second locking plate (31) in the circumferential region having a larger radius preferably has two lateral projections (35),
and/or **characterised in that** at least one, preferably all, of the locking discs (18-21) are designed to be mirror-symmetrical with respect to a mirror plane (38), which mirror plane (38) includes the axis (28)
and/or **characterised in that** a minimum distance (36) is always maintained between the locking discs (18-21) in the non-locked operating state, this minimum distance preferably being in the range of 0.1-5 mm, or 0.1-4 mm, or 0.1-1 mm, in particular in the range of 0.25-0.75 mm.

5. Cooling louvre (1) according to claim 1, **characterised in that** the engagement pins (63) in the locking rod (61) run in locking recesses (64).

6. Cooling louvre according to the preceding claim, **characterised in that** the locking recesses (64) are designed as an elongated hole or elongated recess (64), as a through opening or as a groove, the longer axis of which extends perpendicularly to the main direction of travel of the locking rod (61), and wherein the locking rod (61) is further preferably mounted in such a way that it can be displaced substantially only along its main direction of travel, but not in a direction perpendicular thereto.

7. Cooling louvre according to one of the preceding claims, **characterised in that**, in the fully closed position or in the fully open position, the engagement pins (63) are deflected substantially to the maximum with respect to the axis of rotation of the respective slat (8-11) in the main direction of travel of the locking rod (61), and rotate into a position during rotation into the fully open or the fully closed position, in which they lie substantially at the level of the axis of rotation of the respective slat (8-11) in the main direction of travel of the locking rod (61), and wherein the engagement pins (63) preferably come to lie in an end region (66) of the elongate hole or the elongate recess (64) in the fully open or fully closed position,
wherein preferably the elongated hole or the elongated recess (65) each has a catch recess (66) or a lateral offset (79) in the direction of the maximum deflection of the engagement pins (63), preferably at half the height of the elongated hole or the elongated recess (65),
and/or **characterised in that** the locking rod (61) is guided in a locking guide (62) in such a way that it can only be displaced in a single direction perpendicular to the axes of rotation of the slats (8-11) but not in the direction of the normal to the plane spanned by the axes of rotation of the slats (8-11).

8. Cooling louvre (1) according to one of the preceding claims, **characterised in that** the locking elements (60, 63), preferably in the form of locking discs (18-21), are designed as components separate from the slats, into which preferably bearing pins of the slats are inserted only in a rotationally secured manner.

9. Cooling louvre (1) according to one of the preceding claims, **characterised in that** the locking elements (60, 63), preferably in the form of locking discs (18-21), as well as an optionally present locking rod (61), are arranged in an encapsulated region (22) of the frame separated from the through opening (27) of the frame (2) by a partition wall (23), and wherein preferably bearing pins of the slats engage through through openings (27) in the partition wall (23).

10. Cooling louvre (1) according to one of the preceding claims, **characterised in that** the slats have a length of at least 10 cm, or at least 20 cm, or at least 50 cm, preferably of more than 60 cm or more than 1 m, in particular preferably of in the range of 10 - 150 cm or 20 - 120 cm, or also in the range of 1.2 - 2 m, and wherein in particular preferably a vertical intermediate web (3) is provided in the frame, which supports intermediate bearing regions of the slats.

11. Cooling louvre (1) according to claim 10, **characterised in that** the slats have a manufacturing-related cavity in the interior extending along the axis of the respective slat.

12. Cooling louvre (1) according to one of the preceding claims, **characterised in that** the coupling element is designed as a coupling rod (7), the motor preferably driving the driven slat (9) directly via its axis, and the coupling rod (7), which is preferably arranged parallel to the frame plane and perpendicular to the axes of the slats, is moved via a coupling lever (25), and the other slats (8, 10-11) are moved synchronously via corresponding coupling levers (25) coupled to the coupling rod (7).

13. Method for operating or controlling a cooling louvre according to one of the preceding claims, **characterised in that** the control of the motor (12) is designed such that an error message is output if the motor moves to a locked stop position which does not correspond to the closed or open end position of the slats due to locking of the locking elements (60, 63), preferably in the form of locking discs, wherein preferably the reaching of such a locked stop position is detected via an increase in the torque generated by the motor.

14. Method for producing a cooling louvre (1) according to one of the preceding claims 1-12, **characterised in that** the frame, slats and the locking elements (60, 63), preferably in the form of locking discs and/or locking rods (61), are produced individually from a thermoplastic material, preferably from a glass fibre-reinforced thermoplastic material, in particular preferably from glass fibre-reinforced thermoplastic polyamide in an injection moulding process, and are then assembled to form the cooling louvre (1).

15. Use of a cooling louvre (1) according to any of the preceding claims 1-12 in a means of transport, in particular in an automobile, for the targeted supply of air to an engine, an engine component, an energy storage device or another heat-generating component.

## Revendications

1. Store de radiateur (1), notamment pour une automobile, pour la ventilation contrôlée du moteur,
avec un cadre (2) dans lequel au moins deux lamelles (8-11) sont logées de manière à pouvoir tourner de telle sorte qu'elles peuvent être déplacées de la position de départ à la position d'arrivée.
une position complètement fermée (environ 0°), dans laquelle les lames (17) des lamelles (8-11) sont disposées essentiellement parallèlement au plan du cadre et, dans la zone contiguë, soit se chevauchent partiellement, soit sont étroitement adjacentes, de sorte que l'ouverture (37) du cadre est essentiellement fermée pour le passage de l'air,
dans une position ouverte (environ 90°), dans laquelle les lames (17) des lamelles (8-11) sont disposées essentiellement perpendiculairement au plan du cadre, de sorte que l'ouverture du cadre (37) est essentiellement ouverte au maximum pour le passage de l'air,
peuvent pivoter,
les lamelles (8-11) étant logées dans des points d'appui sur deux côtés opposés du cadre,
dans lequel il est prévu dans ou sur le cadre, sur un côté moteur (6) du cadre, un moteur (12) qui entraîne une seule lamelle (9), et dans lequel il est prévu sur le même côté moteur (6) du cadre un élément de couplage (7) qui transmet de manière synchrone la rotation de la lamelle entraînée (9) aux autres lamelles (8, 10-11),
et un élément de verrouillage (18-21, 60, 63) étant prévu pour chaque lamelle sur le côté de montage (5) du cadre (2) opposé au côté moteur (6) du cadre, dans la zone du montage des lamelles (8-11) prévu à cet endroit, et les éléments de verrouillage (18-21, 60, 63) étant couplés directement ou indirectement de telle sorte, que si au moins l'un des éléments de verrouillage (18-21, 60, 63) ne tourne pas de manière synchrone avec tous les autres éléments de verrouillage (18-21, 60, 63), le mouvement de rotation des éléments de verrouillage (18-21, 60, 63) est bloqué dans au moins une direction, de préférence par adhérence et/ou par engagement positif
**caractérisé en ce que**
les éléments de verrouillage sont réalisés sous forme de disques de verrouillage (18-21, 60, 63) ou sous forme d'éléments de verrouillage (60, 63) avec au moins un tourillon d'engagement (63) décalé radialement par rapport à l'axe de rotation des lamelles (8-11) ,
le tourillon d'engagement (63) s'étendant parallèlement à l'axe de rotation des lamelles (8-11) et effectuant, lors de la rotation de la lamelle, un mouvement synchrone en arc de cercle avec celle-ci, et les tourillons d'engagement (63) de tous les éléments de verrouillage (60) étant couplés par l'intermédiaire d'une tige de verrouillage (61) commune s'étendant perpendiculairement à l'axe des lamelles, et les disques de verrouillage (18-21) présentant une forme qui, lorsqu'au moins l'un des disques de verrouillage ne tourne pas de manière synchrone avec tous les autres disques de verrouillage (18-21), bloque le mouvement de rotation des disques de verrouillage par adhérence et/ou par complémentarité de formes .

2. Store de radiateur (1) selon la revendication 1, **caractérisé en ce qu'**au moins trois, de préférence au moins quatre, en particulier de préférence exactement quatre lamelles sont montées en parallèle dans le cadre, et de préférence chacune des lamelles présente un disque de verrouillage.

3. Store de radiateur (1) selon l'une des revendications précédentes, **caractérisé en ce que** l'élément de verrouillage respectif (18-21, 60, 63), en particulier sous la forme d'un disque de verrouillage (18-21), est couplé à la lamelle correspondante (8-11) dans les deux sens de rotation, et dans lequel les éléments de verrouillage (18-21, 60, 63) sont disposés dans un premier sens de rotation,63), respectivement des disques de verrouillage, présentent de préférence chacun au moins une plaque de verrouillage (30,31) disposée essentiellement perpendiculairement à l'axe de la lamelle respective, au moins une première plaque de verrouillage (30) présentant de préférence un rayon plus grand dans une première zone périphérique (32) que dans une deuxième zone périphérique (33), de préférence essentiellement opposée.

4. Store de radiateur (1) selon l'une des revendications précédentes 3 ou 4, **caractérisé en ce qu'**il existe deux plaques de verrouillage (30, 31) décalées par rapport à l'axe (28) de la vitre de verrouillage (18-21), de préférence adjacentes, de préférence symétriques chacune par rapport à un miroir, chacune de ces plaques de verrouillage présentant notamment une première zone périphérique de plus grand rayon et une deuxième zone périphérique de plus petit rayon, de préférence, les zones périphériques de plus grand rayon des deux plaques de verrouillage (30, 31) étant disposées en face l'une de l'autre par rapport à l'axe du disque de verrouillage, et de préférence une deuxième plaque de verrouillage (31) présentant dans la zone périphérique de plus grand rayon de préférence deux saillies latérales (35),
et/ou **caractérisé en ce qu'**au moins un, de préférence tous les disques de verrouillage (18-21) sont formés de manière symétrique par rapport à un plan de miroir (38), lequel plan de miroir (38) inclut l'axe (28).
et/ou **caractérisé en ce que**, dans l'état de fonctionnement non verrouillé, une distance minimale (36) est toujours maintenue entre les disques de verrouillage (18-21), cette distance minimale étant de préférence de l'ordre de 0,1-5 mm, ou 0,1-4 mm, ou 0,1-1 mm, en particulier de l'ordre de 0,25-0,75 mm.

5. Store de radiateur (1) selon la revendication 1, **caractérisé en ce que** les ergots d'engagement (63) dans la tige de verrouillage (61) se déplacent dans des évidements de verrouillage (64).

6. Store de radiateur (1)selon la revendication précédente, **caractérisé en ce que** les évidements de verrouillage (64) sont conçus sous la forme d'un trou oblong ou d'un évidement allongé (64), d'une ouverture de passage ou d'une rainure, dont le grand axe s'étend perpendiculairement à la direction principale d'extension de la tige de verrouillage (61), et dans lequel la tige de verrouillage (61) est en outre de préférence supportée de telle sorte qu'elle ne peut être déplacée sensiblement que le long de sa direction principale d'extension, mais pas dans une direction perpendiculaire à celle-ci.

7. Store de radiateur (1) selon l'une des revendications précédentes, **caractérisé en ce que**, dans la position entièrement fermée ou dans la position entièrement ouverte, les tourillons d'engagement (63) sont sensiblement déviés au maximum par rapport à l'axe de rotation de la lamelle respective (8-11) dans la direction principale de la tige de verrouillage (61), et tournent dans une position lors de la rotation dans la position entièrement ouverte ou dans la position entièrement fermée, respectivement, dans laquelle ils se trouvent, dans la direction principale de la tige de verrouillage (61), essentiellement à la hauteur de l'axe de rotation de la lamelle respective (8-11), et dans laquelle, de préférence, les tenons d'engagement (63) viennent se placer, dans la position complètement ouverte ou complètement fermée, respectivement dans une zone d'extrémité (66) du trou oblong ou de l'évidement allongé (64),
le trou oblong ou l'évidement allongé (65) présentant de préférence, dans la direction de la déviation maximale des tourillons d'engagement (63), respectivement un renfoncement d'accrochage (66) ou un décalage latéral (79), de préférence à mi-hauteur du trou oblong ou de l'évidement allongé (65),
et/ou **caractérisé en ce que** la tige de verrouillage (61) est guidée dans un guide de verrouillage (62) de telle sorte qu'elle ne peut être déplacée que dans une seule direction perpendiculaire aux axes de rotation des lamelles (8-11) mais pas dans la direction de la normale au plan qui est tendu par les axes de rotation des lamelles (8-11).

8. Store de radiateur (1) selon l'une des revendications précédentes, **caractérisé en ce que** les éléments de verrouillage (60, 63), de préférence sous la forme de disques de verrouillage (18-21), sont conçus comme des composants séparés des lamelles, dans lesquels sont insérés de préférence des tourillons des lamelles uniquement en étant bloqués en rotation.

9. Store de radiateur (1) selon l'une des revendications précédentes, **caractérisé en ce que** les éléments de verrouillage (60, 63), de préférence sous la forme de disques de verrouillage (18-21), ainsi qu'une tige de verrouillage (61) éventuellement présente, sont disposés dans une zone encapsulée (22) du cadre séparée de l'ouverture de passage (27) du cadre (2) par une paroi de séparation (23), et dans lequel de préférence des tourillons des lamelles passent à travers des ouvertures de passage (27) dans la paroi de séparation (23).

10. Store de radiateur (1) selon l'une des revendications précédentes, **caractérisé en ce que** les lamelles ont une longueur d'au moins 10 cm, ou d'au moins 20 cm, ou d'au moins 50 cm, de préférence de plus de 60 cm ou de plus de 1 m, en particulier de préférence de l'ordre de 10 à 150 cm ou de 20 à 120 cm, ou encore de l'ordre de 1,2 à 2 m, et dans lequel il est prévu, en particulier de préférence dans le cadre, une entretoise verticale (3) qui stocke des zones de stockage intermédiaire des lamelles.

11. Store de radiateur (1) selon la revendication 10, **caractérisé en ce que** les lamelles présentent à l'intérieur un espace creux s'étendant le long de l'axe de la lamelle respective, du fait de la fabrication.

12. Store de radiateur (1) selon l'une des revendications précédentes, **caractérisé en ce que** l'élément de couplage est réalisé sous la forme d'une barre de couplage (7), le moteur entraînant de préférence la lamelle entraînée (9) directement par son axe, et la barre de couplage (7), qui est de préférence disposée parallèlement au plan du cadre et perpendiculairement aux axes des lamelles, est déplacée par un levier de couplage (25), et les autres lamelles (8, 10-11) sont déplacées de manière synchrone par des leviers de couplage (25) correspondants couplés à la barre de couplage (7).

13. Procédé de fonctionnement, respectivement de commande, d'un store de radiateur selon l'une des revendications précédentes, **caractérisé en ce que** la commande du moteur (12) est conçue de telle sorte qu'un message d'erreur est émis lorsque le moteur se déplace vers une position de butée verrouillée qui ne correspond pas à la position finale fermée ou ouverte des lamelles en raison du verrouillage des éléments de verrouillage (60, 63), de préférence sous forme de disques de verrouillage, l'atteinte d'une telle position de butée verrouillée étant de préférence détectée par une augmentation du couple généré par le moteur.

14. Procédé de fabrication d'un store de radiateur (1) selon l'une des revendications précédentes 1-12, **caractérisé en ce que** le cadre, les lamelles et les éléments de verrouillage (60, 63), de préférence sous forme de disques de verrouillage et/ou de tiges de verrouillage (61), sont fabriqués individuellement en un matériau thermoplastique, de préférence en un matériau thermoplastique renforcé par des fibres de verre, en particulier de préférence en polyamide thermoplastique renforcé par des fibres de verre, dans un procédé de moulage par injection, et sont ensuite assemblés pour former le store de radiateur (1).

15. Utilisation d'un store de radiateur (1) selon l'une des revendications précédentes 1-12 dans un moyen de transport, notamment dans une automobile, pour l'alimentation en air ciblée d'un moteur, d'un composant du moteur, d'un accumulateur d'énergie ou d'un autre composant générant de la chaleur.
